# EUROPEAN PATENT APPLICATION

(11) **EP 4 503 469 A1**
(43) Date of publication of application: **05.02.2025**
(21) Application number: 23778357.6
(22) Date of filing: 30.03.2023
(51) Int. Cl.: H04B 7/15, H04W 76/10, H04W 76/14, H04W 4/40, H04W 88/04

(54) **RELAY COMMUNICATION METHOD AND APPARATUS**

(30) Priority: 02.04.2022 CN 202210344116
(71) Applicant: Huawei Technologies Co., Ltd., Shenzhen, Guangdong 518129 (CN)
(72) Inventor: XU, Ruixiong, Shenzhen, Guangdong 518129 (CN); PENG, Wenjie, Shenzhen, Guangdong 518129 (CN); PAN, Xiaodan, Shenzhen, Guangdong 518129 (CN); LI, Xiangyu, Shenzhen, Guangdong 518129 (CN)
(74) Representative: Körber, Martin Hans
(86) International application number: PCT/CN2023/085004
(87) International publication number: WO 2023/185992

(57) **Abstract**

This application provides a communication method and apparatus. Before a source terminal establishes a unicast connection to a first target terminal, the source terminal allocates a first identifier to the first target terminal based on a request of a relay terminal, where a bit length of the first identifier is less than or equal to 8 bits. The source terminal sends first data to the first target terminal, where the first identifier is configured in the first data. The relay terminal forwards the first data to the first target terminal for the source terminal based on the first identifier. In the foregoing solutions, the source terminal may send a message to a specific target terminal based on the first identifier, so that the source terminal can communicate with the specific target terminal when a unicast connection between the source terminal and the relay terminal is multiplexed. The bit length of the first identifier is less than or equal to 8 bits, so that signaling overheads can be reduced.

## Description

This application claims priority to Chinese Patent Application No. 202210344116.1, filed with the China National Intellectual Property Administration on April 2, 2022 and entitled "RELAY COMMUNICATION METHOD AND APPARATUS", which is incorporated herein by reference in its entirety.

### TECHNICAL FIELD

This application relates to the field of wireless communication, and more specifically, to a relay communication method and apparatus.

### BACKGROUND

A user equipment (user equipment, UE) to UE relay technology, that is, a technology in which a source UE communicates with a target UE via a relay UE, may be used to promote coverage enhancement or capacity improvement of a sidelink. Specifically, when data and signaling are transmitted between the source UE and a plurality of target UEs via the relay UE, how to reduce overheads of air interface resources between the source UE and the relay UE is a technical problem that needs to be resolved in this application.

### SUMMARY

This application provides a relay communication method and apparatus, to save air interface resources.

According to a first aspect, a relay communication method is provided. The method may be performed by a relay terminal, or may be performed by a component of a relay terminal. The method includes: receiving a first unicast connection establishment request message from a source terminal; sending a second unicast connection establishment request message to a first target terminal, to request to establish a unicast connection between the relay terminal and the first target terminal; receiving, from the first target terminal, a second unicast connection establishment accept message indicating that the first target terminal has accepted a request for establishing the unicast connection between the relay terminal and the first target terminal; sending an identifier allocation request message to the source terminal, to request the source terminal to allocate an identifier to the first target terminal; receiving an identifier allocation response message from the source terminal, where the identifier allocation response message includes a first identifier but does not include a layer 2 address of the first target terminal, a bit length of the first identifier is less than or equal to 8 bits, and the first identifier identifies the first target terminal; receiving, from the source terminal, a third unicast connection establishment request message for requesting to establish a unicast connection between the source terminal and the first target terminal; sending a fourth unicast connection establishment request message to the first target terminal, to request to establish the unicast connection between the source terminal and the first target terminal; receiving, from the first target terminal, a fourth unicast connection establishment accept message indicating that the first target terminal has accepted a request for establishing the unicast connection between the source terminal and the first target terminal; sending, to the source terminal, a third unicast connection establishment accept message indicating that the first target terminal has accepted the request for establishing the unicast connection between the source terminal and the first target terminal, where the third unicast connection establishment accept message includes the first identifier; receiving a first data packet from the source terminal, where the first data packet includes the first identifier and first data; and sending the first data to the first target terminal based on the first identifier.

In a possible implementation, the identifier allocation request message herein may also indicate that the unicast connection between the relay terminal and the first target terminal has been established.

In another possible implementation, the relay terminal does not perform the foregoing step "receiving an identifier allocation response message from the source terminal". In addition, the third unicast connection establishment request message received by the relay terminal from the source terminal includes the first identifier but does not include the layer 2 address of the first target terminal, the bit length of the first identifier is less than or equal to 8 bits, and the first identifier identifies the first target terminal.

Based on the foregoing solution, before the source terminal establishes the unicast connection to the first target terminal, the relay terminal requests the source terminal to allocate the identifier to the first target terminal, where the bit length of the first identifier allocated by the source terminal to the first target terminal is less than or equal to 8 bits. The source terminal sends data to the first target terminal, with the first identifier carried. In the foregoing solution, the relay terminal forwards a message to the first target terminal for the source terminal based on the first identifier allocated by the source terminal, so that the source terminal can communicate with a specific target terminal when a unicast connection between the source terminal and the relay terminal is multiplexed. The bit length of the first identifier is less than or equal to 8 bits, so that signaling overheads can be reduced.

In a possible implementation, the method further includes: receiving a third security activation command message from the first target terminal; sending a fourth security activation command message to the source terminal, where the fourth security activation command message includes the first identifier indicating that the fourth security activation command message is from the first target terminal; receiving a fourth security activation complete message from the source terminal, where the fourth security activation complete message includes the first identifier indicating to send the fourth security activation complete message to the first target terminal; and sending a third security activation complete message to the first target terminal.

With reference to the first aspect, in some implementations of the first aspect, the method further includes: receiving a second data packet from the source terminal, where the second data packet includes a second identifier, second data, and a layer 2 address of the relay terminal, and the first data packet further includes the layer 2 address of the relay terminal.

For example, the second identifier identifies a second target terminal, and the second data is data sent by the source terminal to the second target terminal based on the relay terminal. Both a target layer 2 address of the first data packet and a target layer 2 address of the second data packet are the layer 2 address of the relay terminal. It may be understood that the source terminal may separately send data to the first target terminal and the second target terminal based on the relay terminal, and the first data packet and the second data packet are carried on a same unicast connection between the source terminal and the relay terminal, or, in other words, multiplex the unicast connection between the source terminal and the relay terminal.

In the foregoing solution, the unicast connection between the source terminal and the relay terminal is multiplexed to implement communication between the source terminal and a plurality of target terminals via a same relay terminal, so that air interface overheads can be reduced.

In a possible implementation, the sending the first data to the first target terminal based on the first identifier includes: sending the first data packet to the first target terminal based on the first identifier.

In a possible implementation, the method further includes: receiving a third data packet from the first target terminal, where the third data packet includes third data and the first identifier; and sending the third data packet to the source terminal based on the first identifier.

In a possible implementation, the method further includes: sending the first identifier to the first target terminal.

In the foregoing solution, the relay terminal sends the first identifier to the first target terminal, so that when the source terminal sends data to the first target terminal based on the relay terminal, formats of protocol data units transmitted on the two unicast connections between the source terminal and the relay terminal and between the relay terminal and the first target terminal are consistent, which can implement forward compatibility.

In a possible implementation, the method further includes: receiving fourth data from the first target terminal; configuring the first identifier for the fourth data based on an association relationship, to obtain a fourth data packet; and sending the fourth data packet to the source terminal, where the fourth data packet includes the fourth data and the first identifier.

In the foregoing solution, the relay terminal sends the first identifier to the first target terminal, so that the first identifier can also be carried when the first target terminal sends data to the source terminal based on the relay terminal, which implements forward compatibility.

According to a second aspect, a relay communication method is provided. The method is a method that corresponds to the method in the first aspect and that is performed by a source terminal, so that beneficial effects that can be implemented by the method in the first aspect can also be implemented. Alternatively, the method may be performed by a component of a source terminal. The method includes: sending a first unicast connection establishment request message to a relay terminal; receiving, from the relay terminal, a first unicast connection establishment accept message indicating that a first target terminal has accepted a request for establishing a unicast connection between the relay terminal and the first target terminal; receiving an identifier allocation request message from the relay terminal, where the identifier allocation request message is used to request the source terminal to allocate an identifier to the first target terminal; sending an identifier allocation response message to the relay terminal, where the identifier allocation response message includes a first identifier but does not include a layer 2 address of the first target terminal, a bit length of the first identifier is less than or equal to 8 bits, and the first identifier is used by the source terminal and the relay terminal to identify the first target terminal; sending a third unicast connection establishment request message to the relay terminal, to request to establish a unicast connection between the source terminal and the first target terminal; receiving, from the relay terminal, a third unicast connection establishment accept message indicating that the first target terminal has accepted a request for establishing the unicast connection between the source terminal and the first target terminal; and sending, by the source terminal, a first data packet to the relay terminal, where the first data packet includes the first identifier and first data.

In a possible implementation, the identifier allocation request message herein may also indicate that the unicast connection between the relay terminal and the first target terminal has been established.

In another possible implementation, the source terminal does not perform the foregoing step of "sending an identifier allocation response message to the relay terminal". In addition, the third unicast connection establishment request message sent by the source terminal to the relay terminal includes the first identifier but does not include the layer 2 address of the first target terminal, the bit length of the first identifier is less than or equal to 8 bits, and the first identifier identifies the first target terminal.

In a possible implementation, the method further includes: receiving a fourth security activation command message from the relay terminal, where the fourth security activation command message includes the first identifier indicating that the fourth security activation command message is from the first target terminal; and sending a fourth security activation complete message to the relay terminal, where the fourth security activation complete message includes the first identifier indicating to send the fourth security activation complete message to the first target terminal.

It should be understood that in a process in which the source terminal performs security establishment with the first target terminal, the source terminal may implement security establishment with a specific target terminal based on the first identifier carried in a message forwarded by the relay terminal.

In a possible implementation, a second data packet is sent to the relay terminal, where the second data packet includes a second identifier, second data, and a layer 2 address of the relay terminal, and the first data packet further includes the layer 2 address of the relay terminal.

In the foregoing solution, a unicast connection between the source terminal and the relay terminal may be multiplexed, so that air interface resources are saved.

For example, the second identifier identifies a second target terminal, and the second data is data sent by the source terminal to the second target terminal based on the relay terminal. Both a target layer 2 address of the first data packet and a target layer 2 address of the second data packet are the layer 2 address of the relay terminal. It may be understood that the source terminal may separately send data to the first target terminal and the second target terminal based on the relay terminal, and the first data packet and the second data packet are carried on a same unicast connection between the source terminal and the relay terminal, or, in other words, multiplex the unicast connection between the source terminal and the relay terminal.

According to a third aspect, a relay communication method is provided. The method may be performed by a relay terminal, or may be performed by a component of a relay terminal. The method includes: receiving a first unicast connection establishment request message from a source terminal, where the first unicast connection establishment request message includes a first identifier, a bit length of the first identifier is less than or equal to 8 bits, and the first identifier is associated with a first target terminal; sending a second unicast connection establishment request message to the first target terminal, to request to establish a unicast connection between the relay terminal and the first target terminal; receiving, from the first target terminal, a second unicast connection establishment accept message indicating that the first target terminal has accepted a request for establishing the unicast connection between the relay terminal and the first target terminal; receiving, from the source terminal, a third unicast connection establishment request message for requesting to establish a unicast connection between the source terminal and the first target terminal, where the third unicast connection establishment request message includes the first identifier; sending a fourth unicast connection establishment request message to the first target terminal, to request to establish the unicast connection between the source terminal and the first target terminal; receiving, from the first target terminal, a fourth unicast connection establishment accept message indicating that the first target terminal has accepted a request for establishing the unicast connection between the source terminal and the first target terminal; sending, to the source terminal, a third unicast connection establishment accept message indicating that the first target terminal has accepted the request for establishing the unicast connection between the source terminal and the first target terminal; receiving a first data packet from the source terminal, where the first data packet includes the first identifier and first data; and sending the first data to the first target terminal based on the first identifier.

In the foregoing solution, the relay terminal forwards the first data from the source terminal to the first target terminal based on the first identifier allocated by the source terminal to the first target terminal, so that the source terminal can communicate with a specific target terminal when a unicast connection between the source terminal and the relay terminal is multiplexed.

In a possible implementation, the method further includes: receiving a third security activation command message from the first target terminal; sending a fourth security activation command message to the source terminal, where the fourth security activation command message includes the first identifier indicating that the fourth security activation command message is from the first target terminal; receiving a fourth security activation complete message from the source terminal, where the fourth security activation complete message includes the first identifier indicating to send the fourth security activation complete message to the first target terminal; and sending a third security activation complete message to the first target terminal. It should be understood that in a process in which the source terminal performs security establishment with the first target terminal, the relay terminal may add the first identifier to a message when forwarding the message, so that the source terminal performs security establishment with the specific target terminal.

In a possible implementation, the first unicast connection establishment request message includes a first set, the first set includes a plurality of identifiers, and the plurality of identifiers include the first identifier.

In a possible implementation, the method further includes: receiving a second data packet from the source terminal, where the second data packet includes a second identifier, second data, and a layer 2 address of the relay terminal, and the first data packet further includes the layer 2 address of the relay terminal.

In a possible implementation, the sending the first data to the first target terminal based on the first identifier includes: sending the first data packet to the first target terminal based on the first identifier.

In a possible implementation, the method further includes: receiving a third data packet from the first target terminal, where the third data packet includes third data and the first identifier; and sending the third data packet to the source terminal.

In a possible implementation, the method further includes: sending the first identifier to the first target terminal.

In a possible implementation, the method further includes: receiving fourth data from the first target terminal; configuring the first identifier for the fourth data based on an association relationship, to obtain a fourth data packet; and sending the fourth data packet to the source terminal, where the fourth data packet includes the fourth data and the first identifier.

In the foregoing solution, when sending data to the source terminal based on the relay terminal, the first target terminal uses the first identifier to identify the data, which implements forward compatibility.

According to a fourth aspect, a relay communication method is provided. The method is a method that corresponds to the method in the third aspect and that is performed by a source terminal, so that beneficial effects that can be implemented by the method in the third aspect can also be implemented. Alternatively, the method may be performed by a component of a source terminal. The method includes: sending a first unicast connection establishment request message to a relay terminal, where the first unicast connection establishment request message includes a first identifier, and the first identifier is associated with a first target terminal; sending a third unicast connection establishment request message to the relay terminal, to request to establish a unicast connection between the source terminal and the first target terminal; receiving, from the relay terminal, a third unicast connection establishment accept message indicating that the first target terminal has accepted a request for establishing the unicast connection between the source terminal and the first target terminal; and sending a first data packet to the relay terminal, where the first data packet includes the first identifier and first data.

In a possible implementation, the method further includes: receiving a fourth security activation command message from the relay terminal, where the fourth security activation command message includes the first identifier indicating that the fourth security activation command message is from the first target terminal; and sending a fourth security activation complete message to the relay terminal, where the fourth security activation complete message includes the first identifier indicating to send the fourth security activation complete message to the first target terminal.

It should be understood that in a process in which the source terminal performs security establishment with the first target terminal, the source terminal may implement security establishment with a specific target terminal based on the first identifier carried in a message forwarded by the relay terminal.

In a possible implementation, the first unicast connection establishment request message includes a first set, the first set includes a plurality of identifiers, and the plurality of identifiers include the first identifier.

In the foregoing solution, the source terminal allocates an identifier set by using the first unicast connection establishment request message. Compared with allocating one identifier at a time, this can reduce signaling overheads.

According to a fifth aspect, a relay communication method is provided. The method may be performed by a relay terminal, or may be performed by a component of a relay terminal. The method includes: receiving, from a source terminal, a first discovery request message for requesting to discover a first target terminal, where the first discovery request message includes a first identifier, and the first identifier is associated with the first target terminal; sending a second discovery request message to the first target terminal, to request to discover the first target terminal; receiving, from the first target terminal, a second discovery response message indicating that the first target terminal replies to the relay terminal with a layer 2 address of the first target terminal based on the second discovery request message; receiving, from the first target terminal, a first discovery response message indicating that the first target terminal replies to the source terminal with the layer 2 address of the first target terminal based on the first discovery request message and the second discovery request message; sending the first discovery response message to the source terminal; receiving a first data packet from the source terminal, where the first data packet includes the first identifier and first data; and sending the first data to the first target terminal based on the first identifier.

In a possible implementation, the first discovery request message includes a first set, the first set includes a plurality of identifiers, and the plurality of identifiers include the first identifier.

In a possible implementation, the method further includes: receiving a second data packet from the source terminal, where the second data packet includes a second identifier, second data, and a layer 2 address of the relay terminal, and the first data packet further includes the layer 2 address of the relay terminal.

For example, the second identifier identifies a second target terminal, and the second data is data sent by the source terminal to the second target terminal based on the relay terminal. Both a target layer 2 address of the first data packet and a target layer 2 address of the second data packet are the layer 2 address of the relay terminal. It may be understood that the source terminal may separately send data to the first target terminal and the second target terminal based on the relay terminal, and the first data packet and the second data packet are carried on a same unicast connection between the source terminal and the relay terminal, or, in other words, multiplex the unicast connection between the source terminal and the relay terminal.

In a possible implementation, the sending the first data to the first target terminal based on the first identifier includes: sending the first data packet to the first target terminal based on the first identifier.

In a possible implementation, the method further includes: receiving a third data packet from the first target terminal, where the third data packet includes third data and the first identifier; and sending the third data packet to the source terminal based on the first identifier.

In a possible implementation, the method further includes: sending the first identifier to the first target terminal.

In the foregoing solution, the relay terminal sends the first identifier to the first target terminal, so that when the source terminal sends data to the first target terminal based on the relay terminal, formats of protocol data units transmitted on two unicast connections between the source terminal and the relay terminal and between the relay terminal and the first target terminal are consistent, which can implement forward compatibility.

In a possible implementation, the method further includes: receiving fourth data from the first target terminal; configuring the first identifier for the fourth data based on an association relationship, to obtain a fourth data packet; and sending the fourth data packet to the source terminal, where the fourth data packet includes the fourth data and the first identifier.

According to a sixth aspect, a relay communication method is provided. The method is a method that corresponds to the method in the fifth aspect and that is performed by a source terminal, so that beneficial effects that can be implemented by the method in the fifth aspect can also be implemented. Alternatively, the method may be performed by a component of a source terminal. The method includes: sending a first discovery request message to a relay terminal, to request to discover a first target terminal, where the first discovery request message includes a first identifier, and the first identifier is associated with the first target terminal; receiving, from the relay terminal, a first discovery response message indicating that the first target terminal replies a layer 2 address of the first target terminal to the relay terminal based on a second discovery request message; and sending a first data packet to the relay terminal, where the first data packet includes the first identifier and first data, and the first identifier indicates that the first data is to be sent to the first target terminal, to indicate that the first target terminal replies to the source terminal with the layer 2 address of the first target terminal based on the first discovery request message and the second discovery request message.

In a possible implementation, the first discovery request message includes a first set, the first set includes a plurality of identifiers, and the plurality of identifiers include the first identifier.

In the foregoing solution, the source terminal allocates an identifier set by using the first discovery request message. Compared with allocating one identifier at a time, this can reduce signaling overheads.

According to a seventh aspect, a relay communication method is provided. The method may be performed by a relay terminal, or may be performed by a component of a relay terminal. The method includes: receiving a first unicast connection establishment request message from a source terminal; sending a second unicast connection establishment request message to a first target terminal; receiving, from the first target terminal, a second unicast connection establishment accept message indicating that the first target terminal has established a unicast connection to the relay terminal based on the second unicast connection establishment request message; allocating a first identifier to the first target terminal; receiving a third unicast connection establishment request message from the source terminal; sending the third unicast connection establishment request message to the first target terminal; receiving, from the first target terminal, a third unicast connection establishment accept message indicating that the first target terminal has established a unicast connection to the source terminal based on the third unicast connection establishment request message; sending the third unicast connection establishment accept message to the source terminal; receiving a first data packet from the source terminal, where the first data packet includes the first identifier and first data; and sending the first data to the first target terminal based on the first identifier.

Based on the foregoing solution, before the source terminal establishes the unicast connection to the first target terminal, the relay terminal allocates the first identifier to the first target terminal, and the relay terminal forwards the first data to the first target terminal based on the first identifier in the first data packet from the source terminal. In the foregoing solution, the source terminal can communicate with a specific target terminal when a unicast connection between the source terminal and the relay terminal is multiplexed. In addition, because a quantity of target terminals served by the relay terminal is far less than a quantity of target terminals served by a base station, a quantity of bits of a field of an identifier allocated by the relay terminal to each target terminal is less than that of an identifier allocated by the base station to each target terminal, and signaling overheads can be reduced.

In a possible implementation, after the relay terminal sends the third unicast connection establishment accept message to the source terminal, the method further includes: The relay terminal sends an association relationship between the first identifier and the first target terminal to the source terminal. In this case, the third unicast connection establishment request message includes the first identifier indicating a request for establishing the unicast connection to the first target terminal.

In a possible implementation, the method further includes: receiving a third security activation command message from the first target terminal; sending a fourth security activation command message to the source terminal, where the fourth security activation command message includes the first identifier indicating that the fourth security activation command message is from the first target terminal; receiving a fourth security activation complete message from the source terminal, where the fourth security activation complete message includes the first identifier indicating to send the fourth security activation complete message to the first target terminal; and sending a third security activation complete message to the first target terminal.

It should be understood that in a process in which the source terminal performs security establishment with the first target terminal, the relay terminal may add the first identifier to a message when forwarding the message, so that the source terminal performs security establishment with the specific target terminal.

In a possible implementation, the method further includes: sending the association relationship between the first target terminal and the first identifier to the source terminal.

In a possible implementation, the method further includes: receiving a second data packet from the source terminal, where the second data packet includes a second identifier, second data, and a layer 2 address of the relay terminal, and the first data packet further includes the layer 2 address of the relay terminal.

For example, the second identifier identifies a second target terminal, and the second data is data sent by the source terminal to the second target terminal based on the relay terminal. Both a target layer 2 address of the first data packet and a target layer 2 address of the second data packet are the layer 2 address of the relay terminal. It may be understood that the source terminal may separately send data to the first target terminal and the second target terminal based on the relay terminal, and the first data packet and the second data packet are carried on a same unicast connection between the source terminal and the relay terminal, or, in other words, multiplex the unicast connection between the source terminal and the relay terminal.

In a possible implementation, the sending the first data to the first target terminal based on the first identifier includes: sending the first data packet to the first target terminal based on the first identifier.

In a possible implementation, the method further includes: receiving a third data packet from the first target terminal, where the third data packet includes third data and the first identifier; and sending the third data packet to the source terminal based on the first identifier.

In a possible implementation, the method further includes: sending the first identifier to the first target terminal.

In the foregoing solution, the relay terminal sends the first identifier to the first target terminal, so that when the source terminal sends data to the first target terminal based on the relay terminal, formats of protocol data units transmitted on the two unicast connections between the source terminal and the relay terminal and between the relay terminal and the first target terminal are consistent, which can implement forward compatibility.

In a possible implementation, the method further includes: receiving fourth data from the first target terminal; configuring the first identifier for the fourth data based on the association relationship, to obtain a fourth data packet; and sending the fourth data packet to the source terminal, where the fourth data packet includes the fourth data and the first identifier.

According to an eighth aspect, a relay communication method is provided. The method is a method that corresponds to the method in the seventh aspect and that is performed by a source terminal, so that beneficial effects that can be implemented by the method in the seventh aspect can also be implemented. Alternatively, the method may be performed by a component of a source terminal. The method includes: sending a first unicast connection establishment request message to a relay terminal; sending a third unicast connection establishment request message to the relay terminal, to request to establish a unicast connection between the source terminal and a first target terminal; receiving, from the relay terminal, a third unicast connection establishment accept message indicating that the first target terminal has accepted a request for establishing the unicast connection between the source terminal and the first target terminal; receiving an association relationship between the first target terminal and a first identifier from the relay terminal; and sending a first data packet to the relay terminal based on the association relationship, where the first data packet includes the first identifier and first data.

In a possible implementation, the method further includes: receiving a third security activation command message from the first target terminal; sending a fourth security activation command message to the source terminal, where the fourth security activation command message includes the first identifier indicating that the fourth security activation command message is from the first target terminal; receiving a fourth security activation complete message from the source terminal, where the fourth security activation complete message includes the first identifier indicating to send the fourth security activation complete message to the first target terminal; and sending a third security activation complete message to the first target terminal.

It should be understood that in a process in which the source terminal performs security establishment with the first target terminal, the relay terminal may add the first identifier to a message when forwarding the message, so that the source terminal performs security establishment with a specific target terminal.

In a possible implementation, a second data packet is sent to the relay terminal, where the second data packet includes a second identifier, second data, and a layer 2 address of the relay terminal, and the first data packet further includes the layer 2 address of the relay terminal.

In the foregoing solution, a unicast connection between the source terminal and the relay terminal may be multiplexed, so that air interface resources are saved.

For example, the second identifier identifies a second target terminal, and the second data is data sent by the source terminal to the second target terminal based on the relay terminal. Both a target layer 2 address of the first data packet and a target layer 2 address of the second data packet are the layer 2 address of the relay terminal. It may be understood that the source terminal may separately send data to the first target terminal and the second target terminal based on the relay terminal, and the first data packet and the second data packet are carried on a same unicast connection between the source terminal and the relay terminal, or, in other words, multiplex the unicast connection between the source terminal and the relay terminal.

According to a ninth aspect, a relay communication method is provided. The method may be performed by a relay terminal, or may be performed by a component of a relay terminal. The method includes: receiving, from a source terminal, a first discovery request message for discovering a first target terminal; sending a second discovery request message to the first target terminal, to discover the first target terminal; receiving, from the first target terminal, a second discovery response message indicating that the first target terminal replies to the relay terminal with a layer 2 address of the first target terminal based on the second discovery request message; receiving, from the first target terminal, a first discovery response message indicating that the first target terminal replies to the source terminal with the layer 2 address of the first target terminal based on the first discovery request message and the second discovery request message; allocating a first identifier to the first target terminal; sending the first discovery response message to the source terminal; receiving a first data packet from the source terminal, where the first data packet includes the first identifier and first data; and sending the first data to the first target terminal based on the first identifier.

Based on the foregoing solution, in a process in which the source terminal searches for the first target terminal through a discovery procedure, the relay terminal allocates the first identifier to the first target terminal, and the relay terminal forwards the first data to the first target terminal based on the first identifier in the first data packet from the source terminal. For beneficial effects of the foregoing solution, refer to the beneficial effects of the seventh aspect.

In a possible implementation, the method further includes: sending an association relationship between the first target terminal and the first identifier to the source terminal.

In a possible implementation, the method further includes: receiving a second data packet from the source terminal, where the second data packet includes a second identifier, second data, and a layer 2 address of the relay terminal, and the first data packet further includes the layer 2 address of the relay terminal.

For example, the second identifier identifies a second target terminal, and the second data is data sent by the source terminal to the second target terminal based on the relay terminal. Both a target layer 2 address of the first data packet and a target layer 2 address of the second data packet are the layer 2 address of the relay terminal. It may be understood that the source terminal may separately send data to the first target terminal and the second target terminal based on the relay terminal, and the first data packet and the second data packet are carried on a same unicast connection between the source terminal and the relay terminal, or, in other words, multiplex the unicast connection between the source terminal and the relay terminal.

In a possible implementation, the sending the first data to the first target terminal based on the first identifier includes: sending the first data packet to the first target terminal based on the first identifier.

In a possible implementation, the method further includes: receiving a third data packet from the first target terminal, where the third data packet includes third data and the first identifier; and sending the third data packet to the source terminal based on the first identifier.

In a possible implementation, the method further includes: sending the first identifier to the first target terminal.

In the foregoing solution, the relay terminal sends the first identifier to the first target terminal, so that when the source terminal sends data to the first target terminal based on the relay terminal, formats of protocol data units transmitted on two unicast connections between the source terminal and the relay terminal and between the relay terminal and the first target terminal are consistent, which can implement forward compatibility.

In a possible implementation, the method further includes: receiving fourth data from the first target terminal; configuring the first identifier for the fourth data based on the association relationship, to obtain a fourth data packet; and sending the fourth data packet to the source terminal, where the fourth data packet includes the fourth data and the first identifier.

According to a tenth aspect, a relay communication method is provided. The method is a method that corresponds to the method in the ninth aspect and that is performed by a source terminal, so that beneficial effects that can be implemented by the method in the ninth aspect can also be implemented. Alternatively, the method may be performed by a component of a source terminal. The method includes: sending a first discovery request message to a relay terminal; receiving, from the relay terminal, a first discovery response message indicating that a first target terminal replies to the source terminal with a layer 2 address of the first target terminal based on the first discovery request message and a second discovery request message; receiving an association relationship between the first target terminal and a first identifier from the relay terminal; and sending, by the source terminal, a first data packet to the relay terminal based on the association relationship, where the first data packet includes the first identifier and first data.

Based on the foregoing solution, the source terminal receives the association relationship between the first target terminal and the first identifier from the relay terminal in a process of discovering the first target terminal, and sends data to the first target terminal based on the association relationship. In the foregoing solution, the source terminal can communicate with a specific target terminal when a unicast connection between the source terminal and the relay terminal is multiplexed.

According to an eleventh aspect, a communication apparatus is provided. The apparatus is configured to perform the method in any one of the possible implementations of the first aspect to the tenth aspect. Specifically, the apparatus may include a unit and/or a module, configured to perform the method in any one of the possible implementations of the first aspect to the tenth aspect, for example, a transceiver unit and/or a processing unit.

In a possible implementation, the transceiver unit may be a transceiver or an input/output interface, and the processing unit may be at least one processor or a processing circuit. Optionally, the transceiver may be a transceiver circuit. Optionally, the input/output interface may be an input/output circuit.

According to a twelfth aspect, a communication apparatus is provided, including a processor and an interface circuit. The interface circuit is configured to: receive a signal from another communication apparatus and transmit the signal to the processor, or send a signal from the processor to another communication apparatus. The processor is configured to implement the method in any one of the possible implementations of the first aspect to the tenth aspect by using a logic circuit or executing code instructions.

According to a thirteenth aspect, a processing device is provided, including a processor and a memory. The processor is configured to read instructions stored in the memory, and may receive a signal via a transceiver, and transmit a signal via a transmitter, to perform the method in any one of the possible implementations of the first aspect to the tenth aspect.

According to a fourteenth aspect, a computer-readable storage medium is provided. The storage medium stores a computer program or instructions. When the computer program or the instructions are executed by a communication apparatus, the method in any one of the possible implementations of the first aspect to the tenth aspect is implemented.

According to a fifteenth aspect, a computer program product including instructions is provided. When the computer program product is run on a communication apparatus, the communication apparatus is enabled to perform the method in any one of the possible implementations of the first aspect to the tenth aspect.

According to a sixteenth aspect, a computer program instruction is provided. When the computer program instruction is run on a computer, the computer is enabled to perform the method in any one of the possible implementations of the first aspect to the tenth aspect.

### BRIEF DESCRIPTION OF DRAWINGS

FIG. 1 is a diagram of a vehicle-to-everything communication architecture;
FIG. 2 is a diagram of a terminal-to-terminal relay scenario;
FIG. 3 is a diagram of a user plane protocol stack for layer 2-based terminal-to-terminal relay;
FIG. 4 shows a manner in a model B for a UE to UE relay discovery process;
FIG. 5 is a diagram of a relay communication method 200 according to this application;
FIG. 6 is a diagram of a relay communication method 200" according to this application;
FIG. 7 is a diagram of a relay communication method 300 according to this application;
FIG. 8 is a diagram of a relay communication method 400 according to this application;
FIG. 9 is a diagram of a relay communication method 500 according to this application;
FIG. 10 is a diagram of a relay communication method 600 according to this application;
FIG. 11 is a schematic block diagram of a communication apparatus according to this application; and
FIG. 12 is another schematic block diagram of a communication apparatus according to this application.

### DESCRIPTION OF EMBODIMENTS

Embodiments of this application may be applied to a 5th generation (5th generation, 5G) mobile communication system, a 6th generation (6th generation, 6G) mobile communication system, a Wi-Fi system, or a future mobile communication system.

A base station (base station) in this application may be an evolved NodeB (evolved NodeB, eNodeB), a transmission reception point (transmission reception point, TRP), a next generation NodeB (next generation NodeB, gNB) in the 5G mobile communication system, a next generation NodeB in the 6G mobile communication system, a base station in the future mobile communication system, an access node in a Wi-Fi system, or the like, or may be a module or a unit that completes some functions of the base station.

A UE is a device having a wireless transceiver function, and may send a signal to the base station, or receive a signal from the base station. The UE may also be referred to as a terminal, a mobile station, a mobile terminal, or the like. The terminal may be widely used in various scenarios, for example, device-to-device (device-to-device, D2D), vehicle-to-everything (vehicle-to-everything, V2X) communication, machine type communication (machine type communication, MTC), internet of things (internet of things, IoT), virtual reality, augmented reality, industrial control, self driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

In embodiments of this application, a function of the base station may alternatively be performed by a module (for example, a chip) in the base station, or may be performed by a control subsystem including a base station function. The control subsystem including the base station function herein may be a control center in the foregoing application scenarios, such as the smart grid, industrial control, smart transportation, and the smart city. A function of the terminal may alternatively be performed by a module (for example, a chip or a modem) in the terminal, or may be performed by an apparatus including a terminal function.

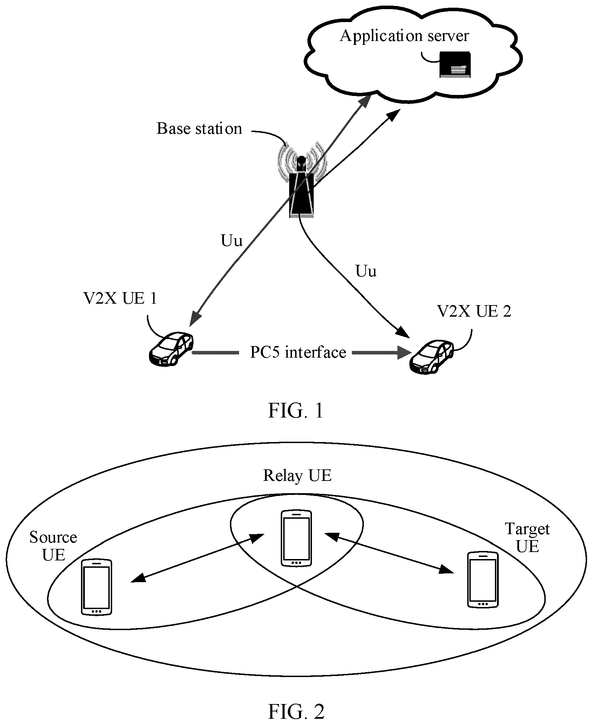

The following separately describes, with reference to FIG. 1 to FIG. 4, examples of a V2X communication architecture to which this application is applied, a UE to UE relay (UE to UE relay, U2U relay) scenario, a user plane protocol stack, and a D2D discovery process.

FIG. 1 is a diagram of the V2X communication architecture. As shown in FIG. 1, the architecture includes two wireless communication interfaces: a proximity-based services communication 5 (proximity-based services communication 5, PC5) interface between UEs and a Uu interface between a base station and a UE. As shown in FIG. 1, a V2X UE 1 and a V2X UE 2 may directly communicate with each other via the PC5 interface, and a communication link is also defined as a sidelink (sidelink, SL). Alternatively, a V2X UE 1 and a V2X UE 2 may communicate with each other via Uu interfaces. The V2X UE 1 sends V2X data to the base station via the Uu interface, the base station sends the V2X data to a V2X application server for processing, then the V2X application server delivers processed data to the base station, and the base station sends the processed data to the V2X UE 2. In a Uu interface-based communication mode, a base station that receives uplink data of the V2X UE 1 and a base station that sends downlink data to the V2X UE 2 may be a same base station, or may be different base stations. This may be specifically determined by locations of the V2X UEs.

V2X supports three communication modes: broadcast (broadcast), multicast (multicast), and unicast (unicast). In the broadcast communication mode, sent broadcast data may be received and parsed by any V2X UE interested in the data. In the multicast communication mode, a V2X UE may send multicast data to another V2X UE that belongs to a same communication group, and a V2X UE that does not belong to the communication group does not receive and parse the multicast data or cannot correctly parse the multicast data. In the unicast communication mode, two V2X UEs need to first establish a unicast connection, and after establishment of the unicast connection is accepted, one V2X UE may send unicast data to the other V2X UE, where only V2X UEs between which a unicast connection is established can correctly parse data sent by each other.

The 3rd generation partnership project (3rd generation partnership project, 3GPP) international standardization organization introduces a device-to-device (device-to-device, D2D) technology in long term evolution (long term evolution, LTE), including two parts: D2D communication and D2D discovery. D2D communication is oriented to public safety, and supports multicast communication, unicast communication, and UE-to-network relay (UE-to-network relay). D2D discovery supports simple commercial broadcast (for example, advertisement broadcast).

With the development of technologies to 5G new radio (new radio, NR), UE to UE relay (UE to UE relay, U2U relay) communication starts to be discussed in 3GPP standards. It may be understood that in this application, the terms D2D and U2U may be interchanged.

FIG. 2 is a diagram of the U2U relay scenario. As shown in FIG. 2, U2U relay is a technology in which a source UE communicates with a target UE via a relay UE, and may be applied to coverage enhancement (for example, signal coverage between the source UE and the target UE is poor or the source UE and the target UE are outside coverage) or capacity improvement (for example, the relay UE is a device with a high capability) of a sidelink. Both communication between the source UE and the relay UE and communication between the relay UE and the target UE are implemented by using the sidelink.

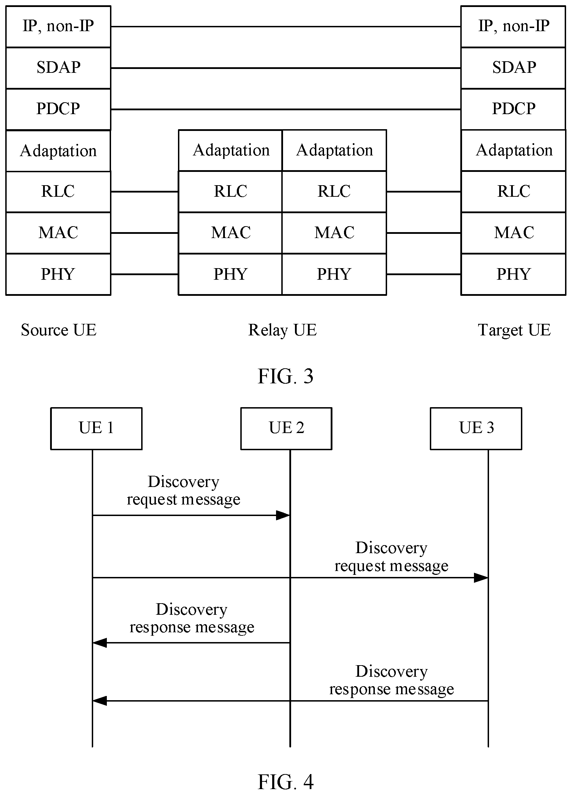

Currently, there are two possible implementations of U2U relay: a layer 3 (layer 3, L3)-based relay manner and a layer 2 (layer 2, L2)-based relay manner. In the L3-based relay manner, user plane data is forwarded at an internet protocol (internet protocol, IP) layer, that is, the relay UE needs to parse, to the IP layer, a data packet sent by the source UE to the target UE, and determines, based on information such as an IP address, to forward the data packet to the target UE. In the L2-based relay manner, user plane data is forwarded below a packet data convergence protocol (packet data convergence protocol, PDCP) layer. In this case, a user plane protocol stack is shown in FIG. 3. FIG. 3 is a diagram of the user plane protocol stack for L2-based U2U relay. The relay UE performs relay forwarding for SL data transmission between the source UE (or a sending UE) and the target UE (or a receiving UE).

A user plane protocol stack of the source UE includes a PDCP layer, a service data adaptation protocol (service data adaptation protocol, SDAP) layer, and an IP/non-IP (non-IP) layer that are for information exchange with the target UE, and an adaptation (adaptation) layer, a radio link control (radio link control, RLC) layer, a medium access control (medium access control, MAC) layer, and a physical (physical, PHY) layer that are for information exchange with the relay UE. A user plane protocol stack of the relay UE includes an adaptation layer, an RLC layer, a MAC layer, and a PHY layer that are for information exchange with the source UE, and an adaptation layer, an RLC layer, a MAC layer, and a PHY layer that are for information exchange with the target UE. A user plane protocol stack of the target UE includes a PDCP layer, a SDAP layer, and an IP/non-IP layer that are for information exchange with the source UE, and an adaptation layer, an RLC layer, a MAC layer, and a PHY layer that are for information exchange with the relay UE.

In a scenario in which data and signaling are transmitted between the source UE and N target UEs via the relay UE (N is an integer greater than 1), N unicast connections may be established between the source UE and the relay UE, where the N unicast connections respectively correspond to the N target UEs. In this communication mode, excessive air interface resources are consumed between the source UE and the relay UE.

It should be further understood that before a unicast connection is established between two UEs, the peer UE may need to be discovered through a discovery (discovery) process, to obtain a destination (destination) layer 2 (layer 2, L2) identifier (identifier, ID) of the peer UE. The foregoing describes U2U relay communication with reference to FIG. 3. The following describes a possible U2U discovery process, a model B, with reference to FIG. 4.

FIG. 4 shows a manner in the model B for the U2U discovery process. For example, a UE 1 searches for another UE. The UE 1 broadcasts a discovery request (discovery solicitation) message to surroundings, to search for the another UE (including but not limited to a UE 2 and a UE 3 in the figure). After receiving the message, the another UE may reply a discovery response (discovery response) message if conditions permit, so that the UE 1 may learn existence of the another UE. Both the discovery request message and the discovery response message are PC5-S (PC5-signaling) messages. The UE 1, the UE 2, or the UE 3 in FIG. 4 may be the foregoing source UE, relay UE, or target UE.

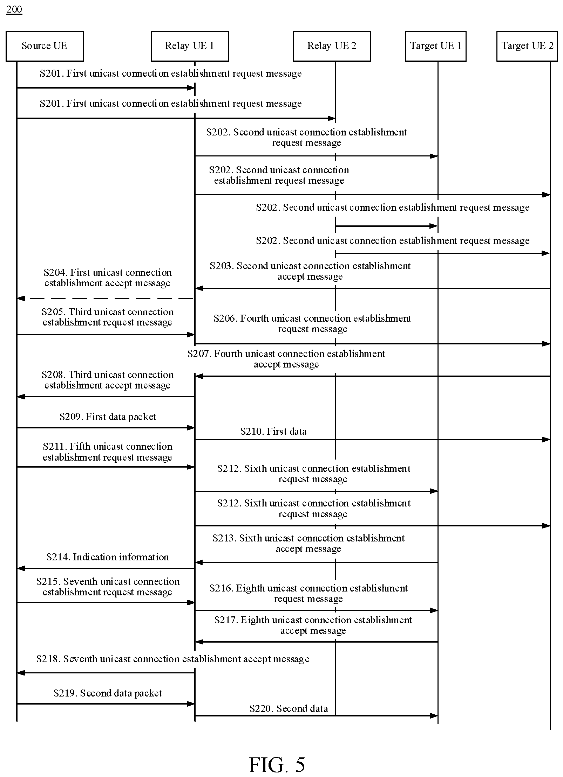

The following describes, in detail with reference to FIG. 5 to FIG. 12, a communication method and apparatus provided in this application.

According to the communication method provided in this application, a source terminal is supported in establishing an end-to-end unicast connection to one or more target terminals via one relay terminal. Only one unicast connection for forwarding a message may be established between the source terminal and the relay terminal. The source terminal may perform end-to-end communication with any one target terminal in the one or more target terminals based on the unicast connection.

In specific implementation, based on whether the source terminal knows existence of the relay terminal (the source terminal directly sends a message to the relay terminal, or sends a message after performing a discovery process and learning existence of the relay terminal), based on different terminals (the source terminal or the relay terminal) that allocate a first identifier to the target terminal, or based on different peer terminals (a specific target terminal or a target terminal interested in a corresponding service (which may be understood as a target terminal having a requirement for the corresponding service)) to which the source terminal needs to transmit data and signaling, there may further be a plurality of possible implementations of the communication method provided in this application.

The following uses an example in which the source terminal is a source UE, the relay terminal is a relay UE, and the target terminal is a target UE 1 and a target UE 2 to respectively describe, with reference to FIG. 5 to FIG. 10, communication methods 200 to 600 provided in this application. In addition, U2U communication in this application is performed in an L2-based relay manner.

In the method 200 to the method 400, an example in which the source UE knows existence of the relay UE is used for description. Further, based on whether establishment of a unicast connection is triggered by a UE or triggered by a service, there may be two different implementations for both the methods 200 and 300. In the methods 500 and 600, an example in which the source UE learns existence of the relay UE through a U2U discovery process that is based on a model B is used for description.

In the methods 200, 300, and 500, an example in which the source UE allocates the first identifier is used for description. In the methods 400 and 600, an example in which the relay UE allocates the first identifier is used for description.

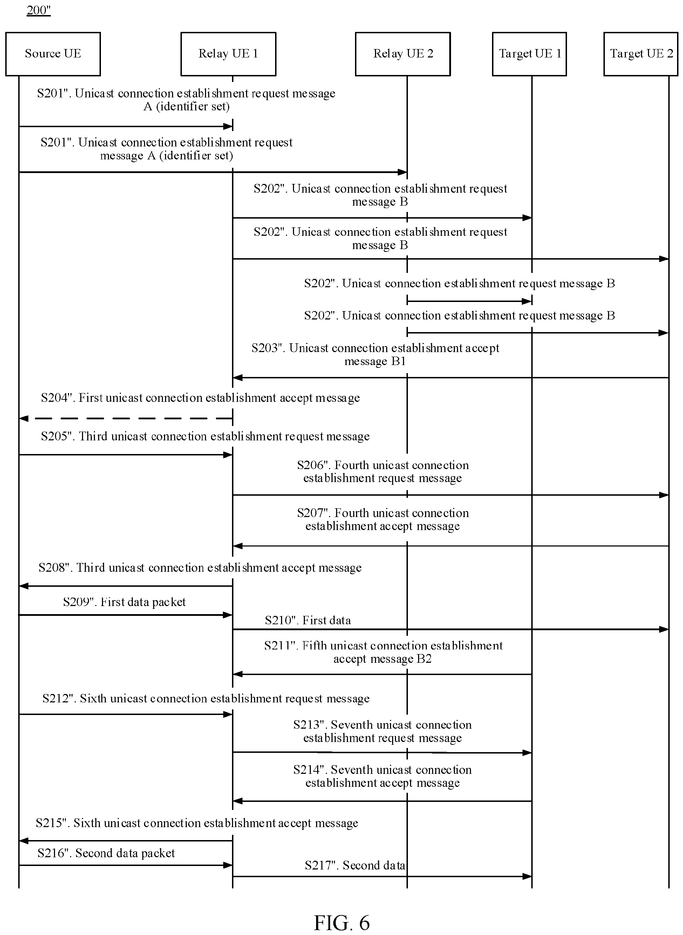

FIG. 5 is a diagram of the communication method 200 according to this application. FIG. 6 is a diagram of a communication method 200" according to this application. In the method 200, the source UE broadcasts, to the relay UE, an establishment request message for establishing a unicast connection to the target UE, and establishes an end-to-end connection to a specific target UE via the relay UE, so that end-to-end communication between the source UE and the target UE can be implemented. In the method 200", the source UE broadcasts a unicast connection establishment request message to the relay UE, to establish, via the relay UE, end-to-end connections to a plurality of target UEs interested in a service, so that end-to-end communication between the source UE and the target UE can be implemented.

S201: The source UE broadcasts a first unicast connection establishment request message for the target UE, and correspondingly, a plurality of relay UEs receive the first unicast connection establishment request message from the source UE. In this application, a unicast connection establishment request may also be referred to as a direct communication request (direct communication request). The first unicast connection establishment request message carries an application layer identifier of the target UE and the first identifier. The first identifier is allocated by the source UE to the target UE. The first identifier may be a local identifier. Optionally, a bit length of the first identifier is less than or equal to 8 bits. The first unicast connection establishment request message may further carry an application layer identifier of the source UE, indication information indicating that relay communication is supported, and the like. A source address of the message is a layer 2 (layer 2, L2) identifier (identifier, ID) of the source UE. The L2 ID in this application is used at a MAC layer. The first identifier in this application is used at an adaptation layer.

After receiving the first unicast connection establishment request message sent by the source UE, the relay UE allocates an L2 address (for example, R-L2-ID-a) associated with the L2 ID of the source UE. After receiving information that is from the source UE and that needs to be forwarded to the target UE, the relay UE forwards the information to the target UE by using the R-L2-ID-a as a source address. In this application, the sent information may be signaling or data. The relay UE may store an association relationship between the L2 ID of the source UE and the R-L2-ID-a. The plurality of relay UEs may receive the first unicast connection establishment request message. In FIG. 5, a relay UE 1 and a relay UE 2 are used as an example for description, but a quantity of relay UEs is not limited.

Alternatively, when a unicast connection has been established between the source UE and the relay UE, the source UE sends the first unicast connection establishment request message to the relay UE by using the unicast connection in S201.

The relay UE may record the first identifier, and may further record a correspondence between the target UE and the first identifier.

S202: The relay UE broadcasts a second unicast connection establishment request message, and correspondingly, the target UE receives the second unicast connection establishment request message from the relay UE. The target UE herein includes the target UE 1 and the target UE 2. The message may further carry at least one of the application layer identifier of the target UE, the application layer identifier of the source UE, the indication information indicating that relay is supported, and a unique (unique) relay identifier (relay identifier, RID) of the relay UE. After receiving the first unicast connection establishment request message, the relay UE changes the source address of the first unicast connection establishment request message sent by the source UE, that is, changes an original L2 ID of the source UE to the R-L2-ID-a, to generate the second unicast connection establishment request message. The second unicast connection establishment request message does not carry the first identifier. In addition, the RID of the relay UE is added to the second unicast connection establishment request message.

The target UE determines, based on whether the second unicast connection establishment request message carries the application layer identifier of the target UE, whether the message is sent to the target UE. If the message carries the application layer identifier of the target UE, it is determined that the message is sent to the target UE.

The plurality of relay UEs may broadcast second unicast connection establishment request messages, and correspondingly, a plurality of target UEs may receive the second unicast connection establishment request messages. In FIG. 5, an example in which the relay UE 1 and the relay UE 2 respectively broadcast second unicast connection establishment request messages and the target UE 1 and the target UE 2 respectively receive the second unicast connection establishment request messages from the relay UE 1 and the relay UE 2 is used for description, but a quantity of relay UEs or target UEs is not limited.

S203: The target UE replies to the relay UE with a second unicast connection establishment accept message, and correspondingly, the relay UE receives the second unicast connection establishment accept message from the target UE. In this application, a unicast connection establishment accept message may also be referred to as a direct communication accept (direct communication accept) message.

After receiving the second unicast connection establishment accept message, the relay UE allocates a layer 2 address (for example, R-L2-ID-b) associated with the target UE 2. The R-L2-ID-b is used by the relay UE to receive information that is from the target UE 2 and that needs to be forwarded to the source UE. In other words, the R-L2-ID-b is used as a source address to forward the information from the target UE 2 to the source UE. The relay UE stores an association relationship between the R-L2-ID-b and an L2 ID of the target UE 2.

FIG. 5 is described by using an example in which the target UE 2 replies to the relay UE 1 with a second unicast connection establishment accept message. The target UE 2 receives the second unicast connection establishment request messages from the plurality of relay UEs, and selects to establish a unicast connection to the relay UE 1. In other words, the target UE 2 replies to the relay UE 1 with the second unicast connection establishment accept message. It should be noted that the target UE 2 may receive a plurality of unicast connection establishment request messages from the source UE, the plurality of messages are forwarded by different relay UEs, and the target UE 2 may select one of the relay UEs to reply to. In the foregoing solution, an example in which the target UE replies to the relay UE 1 in FIG. 5 is used for description, but the target UE is not limited to reply to only the relay UE 1. The target UE 2 may select the relay UE based on link quality between the target UE 2 and the plurality of relay UEs.

A source address of the second unicast connection establishment accept message is the L2 ID of the target UE 2, and a destination layer 2 address is the R-L2-ID-a. The target UE 2 sends the second unicast connection establishment accept message indicating that the target UE 2 has accepted a request for establishing the unicast connection between the relay UE 1 and the target UE 2.

Optionally, before S203 is performed, the method 200 may further include steps of performing security establishment between the target UE 2 and the relay UE 1.

S203-a1: The target UE 2 sends a first security activation command message to the relay UE 1. In this application, a security activation command message may also be referred to as a direct security mode command (direct security mode command) message.

S203-a2: The relay UE 1 replies to the target UE 2 with a first security activation complete message. In this application, a security activation complete message may also be referred to as a direct security mode complete (direct security mode complete) message.

S202, S203-a1, S203-a2, and S203 constitute a process of establishing the unicast connection between the relay UE 1 and the target UE 2.

Optionally, the relay UE 1 associates the target UE 2 with the first identifier or associates a unicast link between the relay UE 1 and the target UE 2 with the first identifier based on consistency between a destination address of the second unicast connection establishment accept message and the source address of the second unicast connection establishment request message. Alternatively, the relay UE 1 may associate the target UE 2 with the first identifier or associate a unicast link between the relay UE 1 and the target UE 2 with the first identifier based on consistency between a destination address of the first security activation command message and the source address of the second unicast connection establishment request message.

Optionally, corresponding to S201, in S204, the relay UE 1 sends a first unicast connection establishment accept message to the source UE, and correspondingly, the source UE receives the first unicast connection establishment accept message from the relay UE 1. A source address of the first unicast connection establishment accept message is the R-L2-ID-b, and a destination address is the L2 ID of the source UE. After the source UE receives the first unicast connection establishment accept message, establishment of a unicast connection between the source UE and the relay UE 1 is completed.

It should be noted that in S204, the unicast connection established between the relay UE 1 and the source UE is used to forward a message for the source UE and the target UE, and is not used for communication between the relay UE 1 and the source UE. When the relay UE 1 needs to communicate with the source UE, the relay UE 1 may establish a new unicast connection to the source UE by using another layer 2 address.

It should be further noted that if an existing unicast connection between the relay UE 1 and the source UE is used to forward the message for the source UE and the target UE, step S204 is not performed, and instead, the message may be directly forwarded for the source UE and the target UE 2 by using the existing unicast connection. For example, if S204 is not performed, the existing unicast connection between the source UE and the relay UE 1 may be established when the source UE establishes an end-to-end unicast connection to another target UE other than the target UE 2 based on the relay UE 1.

In an example, when S204 needs to be performed, before S204 is performed, this implementation may further include steps of performing security establishment between the source UE and the relay UE 1: S204-a1: The relay UE 1 sends a second security activation command message to the source UE. S204-a2: The source UE replies to the relay UE 1 with a second security activation complete message. S201, S204-a1, S204-a2, and S204 constitute a process of establishing the unicast connection between the source UE and the relay UE 1.

Based on whether the target UE 2 sends the first identifier to the relay UE 1 when sending information to the relay UE 1, there are two implementations of S205 to S210.

Implementation 1: The target UE 2 does not send the first identifier to the relay UE 1 when sending signaling and data to the relay UE 1.

S205: The source UE sends a third unicast connection establishment request message to the relay UE 1, and correspondingly, the relay UE 1 receives the third unicast connection establishment request message from the source UE. The third unicast connection establishment request message includes the first identifier indicating that the message is sent to the target UE 2. The third unicast connection establishment request message is used to establish an end-to-end unicast connection between the source UE and the target UE 2 via the relay UE 1. The first identifier is added to the third unicast connection establishment request message at an adaptation layer of the source UE.

S206: The relay UE 1 sends a fourth unicast connection establishment request message to the target UE 2, and correspondingly, the target UE 2 receives the fourth unicast connection establishment request message from the relay UE 1. The relay UE 1 determines, based on association between the R-L2-ID-a and the L2 ID of the source UE, that a source address of the fourth unicast connection establishment request message is the R-L2-ID-a and a destination address is the L2 ID of the target UE 2.

After receiving the third unicast connection establishment request message, the relay UE 1 removes the first identifier from the third unicast connection establishment request message, to generate the fourth unicast connection establishment request message. In other words, the fourth unicast connection establishment request message includes other content in the third unicast connection establishment request message except the first identifier.

S207: The target UE 2 sends a fourth unicast connection establishment accept message to the relay UE 1, and correspondingly, the relay UE 1 receives the fourth unicast connection establishment accept message from the target UE 2. A source address of the fourth unicast connection establishment accept message is the L2 ID of the target UE 2, and a destination address is the R-L2-ID-a.

After receiving the fourth unicast connection establishment accept message, the relay UE 1 determines, based on the destination address of the message being the R-L2-ID-a and with reference to the association relationship between the R-L2-ID-a and the L2 ID of the source UE, to forward the message to the source UE.

S208: The relay UE 1 sends a third unicast connection establishment accept message to the source UE, and correspondingly, the source UE receives the third unicast connection establishment accept message from the relay UE 1. A source address of the third unicast connection establishment accept message is the R-L2-ID-a, and a destination address is the L2 ID of the source UE. The source UE determines, based on the first identifier, that the third unicast connection establishment accept message is from the target UE 2.

After receiving the fourth unicast connection establishment accept message, the relay UE 1 adds the first identifier to the fourth unicast connection establishment accept message, to generate the third unicast connection establishment accept message. In other words, the third unicast connection establishment accept message includes content of the fourth unicast connection establishment accept message and the first identifier.

Optionally, steps S206-a1, S206-a2, S207-a1, and S207-a2 are performed between S206 and S207.

S206-a1: The target UE 2 sends a third security activation command message to the relay UE 1, and correspondingly, the relay UE 1 receives the third security activation command message from the target UE 2. A source address of the third security activation command message is the L2 ID of the target UE 2, and a destination address is the R-L2-ID-a. The third security activation command message may carry a RID.

Correspondingly, the relay UE 1 receives the third security activation command message from the target UE 2, and may determine, based on the RID, that the relay UE 1 needs to forward the message as a relay. The relay UE 1 determines, based on the stored association relationship between the R-L2-ID-a and the L2 ID of the source UE, that the message needs to be forwarded to the source UE.

S206-a2: The relay UE 1 sends a fourth security activation command message to the source UE, and correspondingly, the source UE receives the fourth security activation command message from the relay UE 1. A source address of the fourth security activation command message is the R-L2-ID-b, and a destination address is the layer 2 address of the source UE. The fourth security activation command message carries the RID and the first identifier. The first identifier may be configured by the relay UE 1 at an adaptation layer.

After receiving the fourth security activation command message from the relay UE 1, the source UE may determine, based on the RID, that the fourth security activation command message is forwarded by the relay UE 1, and determine, based on the first identifier, that the fourth security activation command message is from the target UE 2.

S207-a1: The source UE sends a third security activation complete message to the relay UE 1, and correspondingly, the relay UE 1 receives the third security activation complete message from the source UE. The third security activation complete message carries the first identifier. A source address of the third security activation complete message is the L2 ID of the source UE, and a destination address is the R-L2-ID-b.

After receiving the third security activation complete message, the relay UE 1 may determine, based on the first identifier, that the third security activation complete message needs to be forwarded to the target UE 2.

S207-a2: The relay UE 1 sends a fourth security activation complete message to the target UE 2, and correspondingly, the target UE 2 receives the fourth security activation complete message from the relay UE 1. A destination address of the message is the L2 ID of the target UE 2, and a source address is the R-L2-ID-a. The fourth security activation complete message does not carry the first identifier.

S209: The source UE sends a first data packet to the relay UE 1, and correspondingly, the relay UE 1 receives the first data packet from the source UE. A header of the first data packet carries the first identifier, and content of the first data packet is first data. The relay UE 1 determines, based on the first identifier, that the first data needs to be forwarded to the target UE 2.

S210: The relay UE 1 sends the first data to the target UE 2, and correspondingly, the target UE 2 receives the first data from the relay UE 1. In other words, when forwarding the first data packet, the relay UE 1 removes the first identifier from the header of the first data packet, and does not send the first identifier to the target UE 2.

Similarly, the target UE 2 may also send data to the source UE based on the relay UE 1. For example, the target UE 2 sends fourth data to the relay UE 1, and correspondingly, the relay UE 1 receives the fourth data from the target UE 2. The relay UE 1 generates a fourth data packet based on an association relationship between the first identifier and the target UE 2 and the fourth data. The relay UE 1 sends the fourth data packet to the source UE, where the fourth data packet includes the fourth data and the first identifier.

Implementation 2: The target UE 2 sends the first identifier to the relay UE 1 when sending signaling and data to the relay UE 1.

For S205 to S210, refer to S205 to S210 in Implementation 1. A difference is as follows.

In S206, a fourth unicast connection establishment request message sent by the relay UE 1 to the target UE 2 includes the first identifier. In S207, a fourth unicast connection establishment accept message sent by the target UE 2 to the relay UE 1 includes the first identifier. In S206-a1, a third security activation command message sent by the target UE 2 to the relay UE 1 includes the first identifier. In S207-a2, a fourth security activation complete message sent by the relay UE 1 to the target UE 2 includes the first identifier. In S210, the relay UE 1 sends a first data packet to the target UE 2, and correspondingly, the target UE 2 receives the first data packet from the relay UE 1.

Similarly, the target UE 2 may also send data to the source UE based on the relay UE 1. For example, the target UE 2 sends a third data packet to the relay UE 1, and correspondingly, the relay UE 1 receives the third data packet from the target UE 2. The relay UE 1 sends the third data packet to the source UE, and correspondingly, the source UE receives the third data packet from the relay UE 1. The third data packet includes third data and the first identifier. It should be understood that in Implementation 2, before the target UE 2 sends the first identifier to the relay UE 1, the target UE 2 needs to obtain the first identifier. Specifically, an adaptation layer of the target UE 2 obtains the first identifier. The target UE 2 may obtain the first identifier by using the following two possible methods.

Method 1 for obtaining the first identifier by the target UE 2: The relay UE 1 sends indication information to the target UE 2, where the indication information indicates the first identifier corresponding to the target UE 2. Correspondingly, the target UE 2 receives the indication information from the relay UE 1. The indication information may be sent after the relay UE 1 and the target UE 2 complete establishment of the unicast connection and the relay UE 1 learns a correspondence between the target UE 2 and the first identifier, for example, after S203. Alternatively, the indication information may be sent after the end-to-end unicast connection between the source UE and the target UE 2 is established (that is, after S208) and before S209.

Method 2 for obtaining the first identifier by the target UE 2: In S206, the relay UE 1 may add the first identifier to the fourth unicast connection establishment request message when sending the fourth unicast connection establishment request message, and the target UE 2 may obtain the first identifier after receiving the fourth unicast connection establishment request message. Alternatively, in S207-a2, the relay UE 1 adds the first identifier to the fourth security activation complete message when sending the fourth security activation complete message, and the target UE 2 may obtain the first identifier after receiving the fourth security activation complete message.

It should be understood that the target UE 2 is enabled to also learn the first identifier, so that when the source UE and the target UE 2 perform data transmission based on the relay UE 1, formats of data packets transmitted on the two unicast connections between the source UE and the relay UE 1 and between the relay UE 1 and the target UE 2 are consistent, which can implement forward compatibility.

S211: The source UE sends a fifth unicast connection establishment request message to the relay UE 1, and correspondingly, the relay UE 1 receives the fifth unicast connection establishment request message from the source UE. The fifth unicast connection establishment request message carries an application layer identifier of the target UE 1 and a second identifier, and the second identifier is allocated by the source UE to the target UE 1. For a definition of the second identifier, refer to the first identifier in S201. The first identifier identifies the target UE 2, and the second identifier herein identifies the target UE 1. A source address of the fifth unicast connection establishment request message is the L2 ID of the source UE, and a destination address is the R-L2-ID-b. The relay UE 1 stores an association relationship between the R-L2-ID-b and an L2 ID of the target UE 1.

When the source UE communicates with the relay UE 1, a source address and a destination address that are used by a message sent by the source UE to the target UE 1 are the same as a source address and a destination address of a message sent by the source UE to the target UE 2, and a radio link between the source UE and the relay UE 1 is multiplexed. In other words, the messages sent to the target UE 1 and the target UE 2 multiplex a same unicast connection on a communication link between the source UE and the relay UE 1.

After receiving the fifth unicast connection establishment request message sent by the source UE, the relay UE 1 allocates an L2 address (for example, R-L2-ID-c) associated with the L2 ID of the source UE. After receiving information that is from the source UE and that needs to be forwarded to the target UE 1, the relay UE 1 forwards the information to the target UE 1 by using the R-L2-ID-c as a source address.

S212: The relay UE 1 broadcasts a sixth unicast connection establishment request message, and correspondingly, the target UE 1 receives the sixth unicast connection establishment request message from the relay UE 1.

For specific content, refer to the corresponding descriptions of S202. A difference lies in that the second unicast connection establishment request message in S202 is replaced with the sixth unicast connection establishment request message, the R-L2-ID-a in S202 is replaced with the R-L2-ID-c, and the target UE 2 in S202 is replaced with the target UE 1.

S213: The target UE 1 replies to the relay UE 1 with a sixth unicast connection establishment accept message, and correspondingly, the relay UE 1 receives the sixth unicast connection establishment accept message from the target UE 1. For specific content, refer to the descriptions of S203. A difference lies in that the second unicast connection establishment accept message in S203 is replaced with the sixth unicast connection establishment accept message, the R-L2-ID-a in S203 is replaced with the R-L2-ID-c, and the target UE 2 in S203 is replaced with the target UE 1. Optionally, before S213 is performed, this implementation may further include a step of performing security establishment between the target UE 1 and the relay UE 1. For details, refer to the descriptions of S203-a1 and S203-a2. A difference lies in that the first security activation command message in S203 is replaced with a fifth security activation command message, and the first security activation complete message in S203 is replaced with a fifth security activation complete message.

S214: The relay UE 1 sends indication information to the source UE, where the indication information indicates that the relay UE 1 has established a unicast connection to the target UE 1.

For details of S215 to S220, refer to the corresponding descriptions of S205 to S210. A difference lies in that the target UE 2 is replaced with the target UE 1, the first identifier is replaced with the second identifier, and the R-L2-ID-a is replaced with the R-L2-ID-c.

S215: The source UE sends a seventh unicast connection establishment request message to the relay UE 1, and correspondingly, the relay UE 1 receives the seventh unicast connection establishment request message from the source UE.

S216: The relay UE 1 sends an eighth unicast connection establishment request message to the target UE 1, and correspondingly, the target UE 1 receives the eighth unicast connection establishment request message from the relay UE 1.

S217: The target UE 1 sends an eighth unicast connection establishment accept message to the relay UE 1, and correspondingly, the relay UE 1 receives the eighth unicast connection establishment accept message from the target UE 1.

S218: The relay UE 1 sends a seventh unicast connection establishment accept message to the source UE, where a source address of the message is the R-L2-ID-b, and a destination address is the L2 ID of the source UE.

S219: The source UE sends a second data packet to the relay UE 1, and correspondingly, the relay UE 1 receives the second data packet from the source UE.

A source address of the second data packet herein is the L2 ID of the source UE, and a destination address is the R-L2-ID-b. It should be understood that S201 and S204 constitute a process of establishing a unicast connection link between the source UE and the relay UE 1, and in the foregoing steps, the relay UE 1 associates the R-L2-ID-b with the target UE 1 and the target UE 2 separately. The destination address of the fifth unicast connection establishment request message herein is also the R-L2-ID-b, which indicates that when the source UE communicates with different target UEs, the unicast connection between the source UE and the relay UE 1 may be multiplexed.

S220: The relay UE 1 sends second data to the target UE 1.

S211 to S218 are optional. The source UE may alternatively establish a unicast connection to the target UE 1 in another manner (for example, by using a method in the method 200"), and then perform data transmission with the target UE 1 through S219 and S220.

In the method 200, the source UE separately performs end-to-end communication with the target UE 1 and the target UE 2 via the relay UE 1, and data sent to the target UE 1 and the target UE 2 may multiplex a same unicast connection (that is, a source address and a destination address for communication between the source UE and the relay UE 1 are the same, for example, a source address of a message sent by the source UE to the relay UE 1 is the L2 ID of the source UE, and a destination address is the R-L2-ID-b, or a source address of a message sent by the relay UE 1 to the source UE is the R-L2-ID-b, and a destination address is the L2 ID of the source UE) on the communication link between the source UE and the relay UE 1, so that air interface overheads between the source UE and the relay UE 1 can be reduced. The relay UE 1 may determine, based on the first identifier corresponding to the target UE 2 or the second identifier corresponding to the target UE 1, which is carried in a data packet, whether the data packet is sent to the target UE 1 or the target UE 2, to implement end-to-end communication between the source UE and the target UE 1 or the target UE 2. In addition, the source UE configures an identifier for the target UE, and adds the identifier to a message for requesting to establish a unicast connection to the target UE, so that the source UE and the target UE can communicate with each other based on the identifier configured by the source UE after establishment of the unicast connection, a case in which the relay UE can forward information for the target UE only after the source UE notifies, by using separate signaling, the relay UE of the identifier configured for the target UE is avoided, and signaling overheads are reduced.

FIG. 6 is the diagram of the communication method 200" according to this application.

S201": The source UE broadcasts a unicast connection establishment request message A, and correspondingly, the relay UE receives the unicast connection establishment request message A from the source UE.

The message carries an application identifier or V2X service information, and indicates to establish an end-to-end unicast connection to the target UE interested in an application or a service. The message further carries an identifier set, and the identifier set includes one or more identifiers allocated by the source UE to the target UE interested in the application or the service. The identifier in the identifier set may be the first identifier or the second identifier in the method 200. Each identifier in the identifier set may be correspondingly allocated to one target UE. A source address of the message is an L2 ID of the source UE. Optionally, the message may further carry an application layer identifier of the source UE, indication information indicating that relay is supported, and the like.

After the relay UE receives the unicast connection establishment request message A sent by the source UE, the relay UE allocates a layer 2 address (for example, R-L2-ID-a) associated with the L2 ID of the source UE. For specific descriptions of the R-L2-ID-a, refer to S201.

S202": The relay UE broadcasts a unicast connection establishment request message B, and correspondingly, the target UE receives the unicast connection establishment request message B from the relay UE. The target UE herein includes the target UE 1 and the target UE 2.

A difference between S202" and S202 lies in that in S202, the target UE determines, based on whether the second unicast connection establishment request message carries the application layer identifier corresponding to the target UE, whether the target UE is a receiver of the message, while in S202", the target UE determines, based on whether the target UE is interested in the service or whether the target UE has a requirement for the service, whether the unicast connection establishment request message B is related to the target UE. For a method for generating the unicast connection establishment request message B, refer to the method for generating the second unicast connection establishment request message.

For specific descriptions of a process of S203", refer to S203. A difference lies in that the second unicast connection establishment accept message in S203 is replaced with a unicast connection establishment accept message B1.

Optionally, before S203" is performed, the method 200" may further include steps of performing security establishment between the target UE 2 and the relay UE 1: S203"-a1 and S203"-a2. For S203"-a1 and S203"-a2, refer to the corresponding descriptions of S203-a1 and S203-a2 respectively.

S202", S203"-a1, S203"-a2, and S203" constitute a process of establishing a unicast connection between the relay UE 1 and the target UE 2.

After the relay UE 1 establishes the unicast connection to the target UE 2, the relay UE 1 may associate the target UE 2 with an identifier in the identifier set, for example, associate the target UE 2 with the first identifier. It should be understood that in specific implementation, the relay UE 1 does not necessarily store an association relationship between the target UE 2 and a specific identifier, but may associate the target UE 2 with the identifier set. After establishing a unicast connection to another target UE, the relay UE 1 may also associate the another target UE with the identifier set. Optionally, if a quantity of target UEs that establish unicast connections to the relay UE 1 is greater than a quantity of identifiers included in the identifier set, the relay UE 1 may request the source UE to allocate more identifiers.

For other steps S205" to S210", refer to the descriptions of S205 to S210.

The following steps S211" to S217" are described by using an example in which the source UE performs end-to-end communication with the target UE 1.

In S202", after the target UE 1 receives the unicast connection establishment request message B broadcast by the relay UE 1, the target UE 1 determines, based on the application identifier carried in the unicast connection establishment request message B, to perform S211", and the target UE 1 replies to the relay UE 1 with a unicast connection establishment accept message B2. For details, refer to the descriptions of S213. After the relay UE 1 establishes a unicast connection to the target UE 1, the relay UE 1 may associate the target UE 1 with an identifier in the identifier set, for example, associate the target UE 1 with a second identifier.

Optionally, after S211", the relay UE 1 sends indication information to the source UE, where the indication information indicates that the relay UE 1 has established the unicast connection to the target UE 1.

For a specific process of S212" to S217", refer to the specific descriptions of S215 to S220 in the method 200.

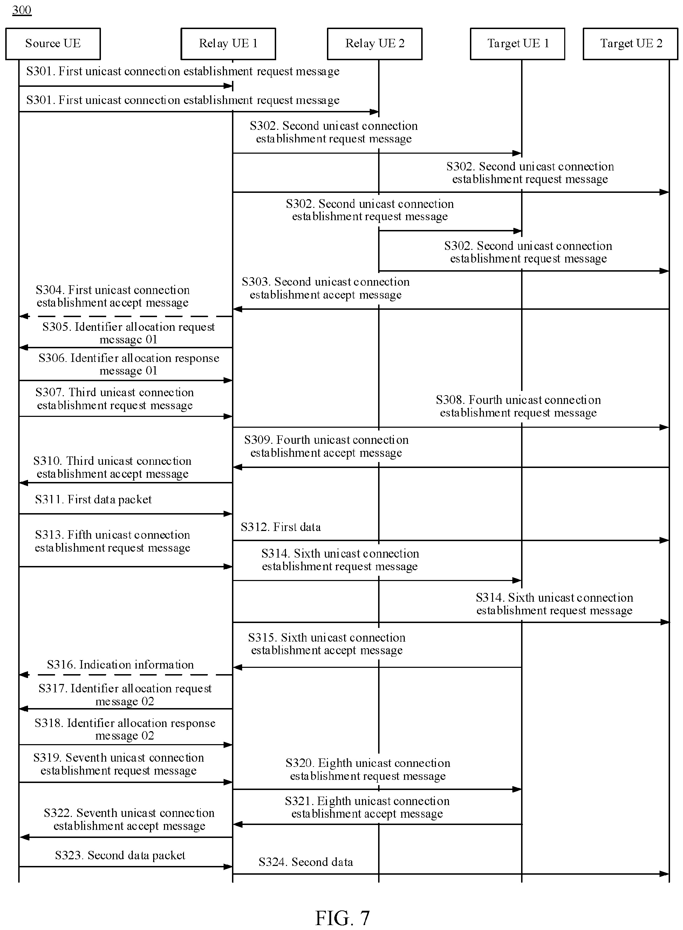

FIG. 7 is a diagram of the communication method 300 according to this application. A difference from the method 200 or the method 200" lies in that in the method 300, the source UE does not send, to the relay UE by using a unicast connection establishment request message, an identifier allocated to the target UE, and instead, the source UE allocates the identifier to the target UE after the relay UE indicates an identifier of the target UE to the source UE, or the source UE allocates the identifier to the target UE after the relay UE indicates to the source UE that a unicast connection to the target UE has been established. Further, in the method 300, the source UE broadcasts, to the relay UE, an establishment request message for establishing the unicast connection to the target UE, and establishes an end-to-end connection to a specific target UE via the relay UE, so that end-to-end communication between the source UE and the target UE can be implemented. In a method 300", the source UE broadcasts a unicast connection establishment request message to the relay UE, to establish, via the relay UE, end-to-end connections to a plurality of target UEs interested in a service, so that end-to-end communication between the source UE and the target UE can be implemented. For beneficial effects of the methods 300 and 300", directly refer to the methods 200 and 200".

S301: The source UE broadcasts a first unicast connection establishment request message for the target UE, and correspondingly, a plurality of relay UEs receive the first unicast connection establishment request message from the source UE. The first unicast connection establishment request message carries an application layer identifier of the target UE. The first unicast connection establishment request message may further carry an application layer identifier of the source UE, indication information indicating that relay communication is supported, and the like. A source address of the message is an L2 ID of the source UE.

Compared with that in S201, the first unicast connection establishment request message herein does not carry the first identifier. Another processing process in S301 is the same as that in S201.

For details of S302 to S304, refer to the corresponding descriptions of S202 to S204.

S305: The relay UE sends an identifier allocation request message 01 to the source UE, and correspondingly, the source UE receives the identifier allocation request message 01 from the relay UE. The message 01 is used to request the source UE to allocate an identifier to the target UE 2.

The identifier allocation request message 01 may carry an L2 ID of the target UE 2, and may further carry indication information indicating that the relay UE has established a unicast connection to the target UE 2.

S306: The source UE sends an identifier allocation response message 01 to the relay UE, and correspondingly, the relay UE receives the identifier allocation response message 01 from the source UE. The identifier allocation response message 01 includes the first identifier but does not include the L2 ID of the target UE 2, a bit length of the first identifier is less than or equal to 8 bits, and the first identifier identifies the target UE 2.

Correspondingly, the relay UE determines an association relationship between the first identifier and the target UE 2.

Optionally, the relay UE may establish unicast connections to M target UEs, where M is a positive integer, and the M target UEs include the target UE 2. In S305, the identifier allocation request message 01 sent by the relay UE to the source UE may include a quantity M, where the quantity M is used to request the source UE to allocate M identifiers to the M target UEs. The M identifiers include the first identifier.

For other steps S307 to S312, refer to corresponding descriptions of S205 to S210 respectively.

For S313 to S316, refer to the descriptions of S211 to S214 respectively. A difference lies in that a fifth unicast connection establishment request message in S313 does not carry a second identifier.

For S317 and S318, refer to the descriptions of S305 and S306. A difference lies in that the identifier allocation request message 01 in S305 and S306 is replaced with an identifier allocation request message 02, the identifier allocation response message 01 in S305 and S306 is replaced with an identifier allocation response message 02, the first identifier is replaced with the second identifier, the target UE 2 is replaced with the target UE 1, a first data packet is replaced with a second data packet, and first data is replaced with second data.

For S319 to S324, refer to the descriptions of S215 to S220.

In the method 300", for S301" to S324", refer to the descriptions of S301 to S324 in the method 300. A difference lies in that the first unicast connection establishment request message in S301 carries an application identifier, a second unicast connection establishment request message sent by the relay UE 1 also carries the application identifier, the target UE 2 replies to the second unicast connection establishment request message based on the application identifier in S303", the fifth unicast connection establishment request message in S313 carries the application identifier, a sixth unicast connection establishment request message sent by the relay UE 1 also carries the application identifier, and the target UE 2 replies to the sixth unicast connection establishment request message based on the application identifier in S303".

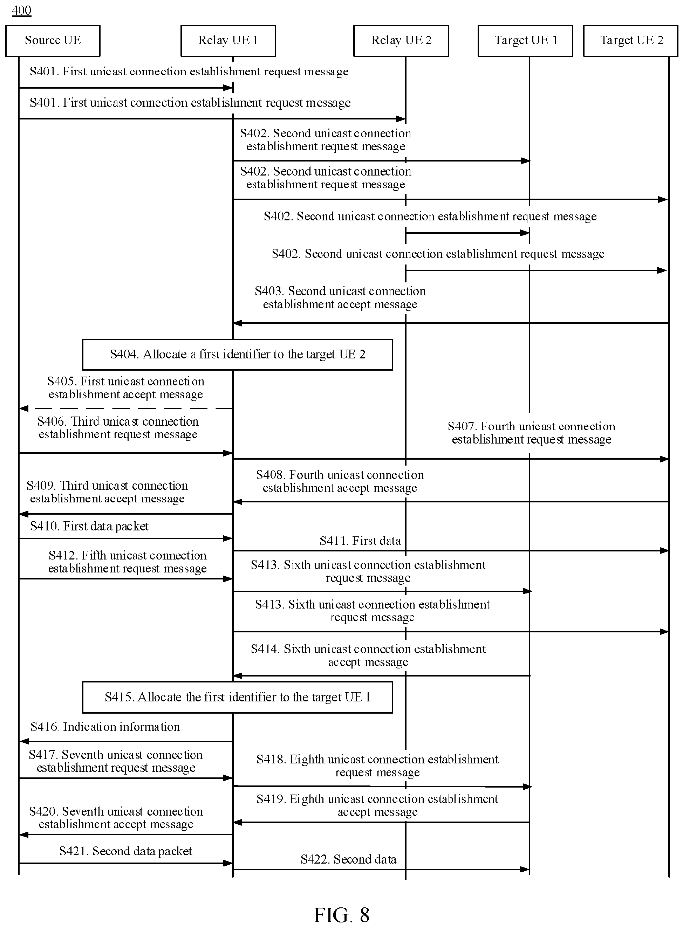

FIG. 8 is a diagram of the communication method 400 according to this application. A difference between the method 400 and the method 300 lies in that in the method 300, the source UE allocates the identifier to the target UE, and in the method 400, the relay UE allocates an identifier to the target UE. Each time the relay UE receives a unicast connection establishment accept message from the target UE, the relay UE allocates an identifier to the target UE, and sends the identifier to the source UE.

For S401 to S403, refer to the descriptions of S301 to S303 in the method 300.

S404: The relay UE allocates the first identifier to the target UE 2. For descriptions of the first identifier, refer to the descriptions related to the first identifier in S201.

For S405, refer to the corresponding descriptions of S304.

For S406 to S411, refer to the descriptions of S307 to S312.

For S412 to S422, refer to the corresponding descriptions of S401 to S411. A difference is as follows.

A first unicast connection establishment request message is replaced with a fifth unicast connection establishment request message. A second unicast connection establishment request message is replaced with a sixth unicast connection establishment request message. A second unicast connection establishment accept message is replaced with a sixth unicast connection establishment accept message. The target UE 2 is replaced with the target UE 1. A third unicast connection establishment request message is replaced with a seventh unicast connection establishment request message. A fourth unicast connection establishment request message is replaced with an eighth unicast connection establishment request message. A fourth unicast connection establishment accept message is replaced with an eighth unicast connection establishment accept message. A third unicast connection establishment accept message is replaced with a seventh unicast connection establishment accept message. A first data packet is replaced with a second data packet. First data is replaced with second data.

In addition, in S417, because the relay UE 1 has established a unicast connection to the source UE, the relay UE 1 does not send a unicast connection establishment accept message, but sends, to the source UE, indication information indicating an association relationship between the first identifier and the target UE 2.

The first unicast connection establishment request message in S401 carries a first application identifier (or V2X service information), and the second unicast connection establishment request message in S402 also carries the first application identifier. The target UE 1 determines, based on the first application identifier in S402, that there is no need to reply to the second unicast connection establishment request message. The fifth unicast connection establishment request in S412 includes a second application identifier, and the sixth unicast connection establishment request message in S413 also includes the second application identifier. The second application identifier is different from the first application identifier. The target UE 1 determines, based on the second application identifier, that there is a need to reply to the sixth unicast connection establishment request message, and performs S415.

In another possible implementation, the first unicast connection establishment request message in S401 carries a first application identifier (or V2X service information), and the second unicast connection establishment request message in S402 also carries the first application identifier. Both the target UE 1 and the target UE 2 determine, based on the first application identifier, that there is a need to reply to the second unicast connection establishment request message. In this case, S412 to S414 may not be performed, and the sixth unicast connection establishment accept message in S415 may be used to reply to the second unicast connection establishment request message in S402.

In this embodiment of this application, first, a unicast connection between the source UE and the relay UE is multiplexed to implement communication between the source UE and a plurality of target UEs via the same relay UE, so that air interface overheads can be reduced. Second, the relay UE allocates the identifier to the target UE, and sends the identifier to the source UE, so that the source UE can communicate with a specific target UE when the unicast connection between the source UE and the relay UE is multiplexed. Third, because a quantity of target UEs served by the relay UE is far less than that of target UEs served by a base station, a quantity of bits of a field of an identifier allocated by the relay UE to each target UE is less than that of an identifier allocated by the base station to each target UE, and signaling overheads can be reduced.

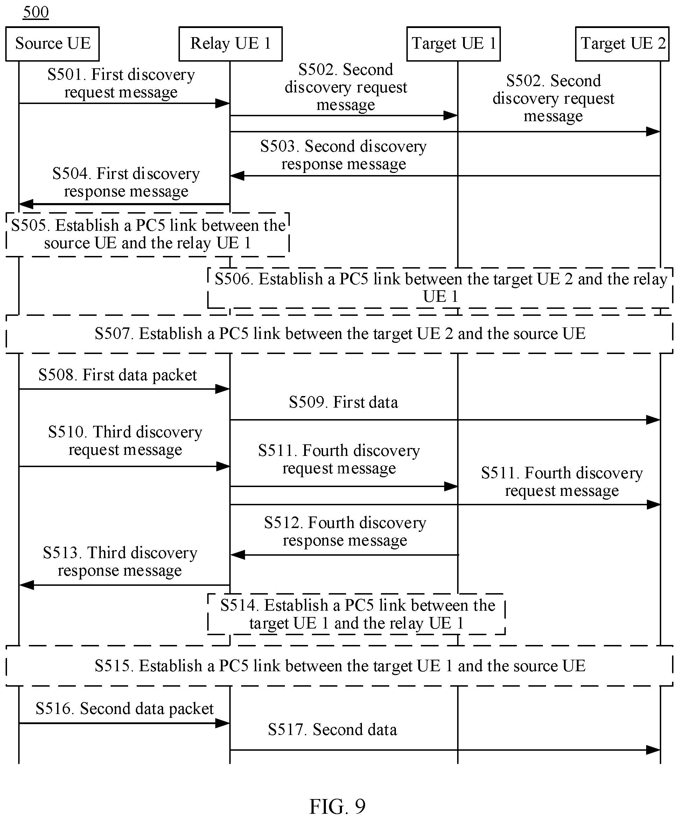

FIG. 9 is a diagram of the communication method 500 according to this application. A difference from the foregoing methods lies in that in the method 500, before the source UE sends a unicast connection establishment request message for the target UE, the source UE has allocated an identifier to the target UE and broadcast the identifier. Specifically, in a U2U discovery process based on a manner in a model B, the source UE adds, to a broadcast discovery request message, the identifier allocated to the target UE. The relay UE receives a discovery response message from the target UE, associates the target UE with the identifier, and sends a correspondence between the identifier and the target UE to the source UE in a process of establishing an end-to-end unicast connection between the source UE and the target UE.

S501: The source UE broadcasts a first discovery request (discovery solicitation) message, and correspondingly, the relay UE 1 receives the first discovery request message. The first discovery request message carries information about the source UE (for example, which may be an application layer identifier of the source UE), information about the target UE 2 (for example, which may be an application layer identifier of the target UE 2), and the first identifier allocated by the source UE to the target UE 2. For descriptions of the first identifier, refer to the related descriptions of S201. A source address of the first discovery request message is an L2 ID of the source UE. The first discovery request message is used to discover a possible relay UE and the target UE 2.

It should be understood that in the discovery process based on the model B, the source UE searches for a possible relay UE by broadcasting a discovery request message, and the source UE can learn existence of the relay UE only after receiving a discovery response message from the relay UE. In the method 500, the relay UE 1 is used as an example for description, but another relay may receive the first discovery request message.

It should be further understood that only an example in which the source UE broadcasts the first discovery request message is used herein for description. The source UE may further broadcast another discovery request message, for example, a third discovery request message. The third discovery request message carries the information about the source UE, information about the target UE 1, and a second identifier allocated by the source UE to the target UE 1.

After receiving the first discovery request message, the relay UE allocates an L2 address associated with the L2 ID of the source UE, for example, R-L2-ID-d, and changes the L2 ID of the source UE in the first discovery request message to the R-L2-ID-d, to generate a second discovery request message. The second discovery request message does not carry the first identifier. In addition, a RID of the relay UE is added to the second discovery request message.

S502: The relay UE 1 broadcasts the second discovery request message, and correspondingly, the target UE 1 and the target UE 2 receive the second discovery request message from the relay UE 1. The second discovery request message carries the information about the source UE, the information about the target UE 2, and information about the relay UE (for example, the RID).

It should be understood that after receiving the first discovery request message sent by the source UE, the relay UE 1 determines to forward the message for the source UE as a relay, that is, broadcast the second discovery request message. A source address of the message is the R-L2-ID-d. The R-L2-ID-d is an L2 ID that is allocated by the relay UE 1 and that is associated with the source UE. For related descriptions, refer to the descriptions related to the R-L2-ID-a in S202.

S503: The target UE 2 replies to the possible relay UE with a second discovery response (discovery response) message, and correspondingly, the possible relay UE receives the second discovery response message from the target UE 2. The second discovery response message carries the information about the source UE and the information about the target UE 2. A source address of the second discovery response message is an L2 ID of the target UE 2, and a destination address is the R-L2-ID-d.

If the target UE 2 receives second discovery request messages from M possible relay UEs in S502, the target UE 2 may reply to second discovery request messages of N possible relay UEs, where 1≤N≤M, and both N and M are integers.

S502 and S503 constitute a process in which the relay UE discovers the target UE.

S504: The relay UE 1 replies a first discovery response message to the source UE, and correspondingly, the source UE receives the first discovery response message from the relay UE 1. The first discovery response message carries the information about the source UE and the information about the target UE 2. The relay UE 1 allocates R-L2-ID-e associated with the target UE 2, and uses the R-L2-ID-e as a source address of the first discovery response message. A destination address of the first discovery response message is an ID of the source UE.

Correspondingly, the source UE may obtain an association relationship between the target UE 2 and the first identifier based on the destination address of the first discovery response message being the source address of the first discovery request message.

Optionally, the N possible relay UEs discover the target UE 2 based on the first discovery request message, and reply to the source UE with first discovery response messages. The source UE may select, based on a factor such as link quality, the relay UE 1 from the N possible relay UEs that reply with the first discovery response messages, and send data to the target UE 2 via the relay UE 1 in a subsequent step, where N is a positive integer.

S501 and S504 constitute a process in which the source UE discovers the relay UE 1. S501 to S504 constitute a process in which the source UE discovers the target UE 2.

Optionally, in S505, a PC5 link is established between the source UE and the relay UE 1. For details, refer to the corresponding descriptions of S201 and S205 in the method 200.

If an available PC5 link already exists between the source UE and the relay UE 1, S505 is not performed.

Optionally, in S506, a PC5 link is established between the target UE 2 and the relay UE 1. For details, refer to the corresponding descriptions of S202 and S203 in the method 200.

If an available PC5 link already exists between the target UE 2 and the relay UE 1, S506 is not performed.

Optionally, in S507, a PC5 link is established between the source UE and the target UE 2. For details, refer to the corresponding descriptions of S205 to S208 in the method 200.

If an available PC5 link already exists between the target UE 2 and the source UE, S507 is not performed.

For details of S508 and S509, refer to the corresponding descriptions of S209 and S210.

For S510 to S513, refer to descriptions of S501 to S504. A difference is as follows.

The first discovery request message is replaced with a third discovery request message. The second discovery request message is replaced with a fourth discovery request message. The second discovery response message is replaced with a fourth discovery response message. The first discovery response message is replaced with a third discovery response message. The target UE 2 is replaced with the target UE 1. The first identifier is replaced with a second identifier.

For details of S514 to S517, refer to the corresponding descriptions of S506 to S509. A difference lies in that the target UE 2 is replaced with the target UE 1, the first identifier is replaced with the second identifier, a first data packet is replaced with a second data packet, first data is replaced with second data, the L2 ID of the target UE 2 is replaced with an L2 ID of the target UE 1, and the R-L2-ID-e is replaced with R-L2-ID-f. The R-L2-ID-f is associated with the source UE, and is used as a source address for forwarding a message from the source UE by the relay to the target UE 1.

In S515 to S517, the relay UE 1 forwards a message for the source UE and the target UE 1. After receiving a message from the target UE 1, the relay UE 1 changes a source address of the message from the target UE 1 to R-L2-ID-d, and changes a destination address to the L2 ID of the source UE. Correspondingly, when the source UE sends a message for the target UE 1 or the target UE 2 to the relay UE 1, a destination address of the message is R-L2-ID-d. Therefore, a unicast connection between the source UE and the relay UE 1 can be multiplexed.

In this embodiment of this application, first, a unicast connection between the source UE and the relay UE is multiplexed to implement communication between the source UE and a plurality of target UEs via the same relay UE, so that air interface overheads can be reduced. Second, the source UE allocates an identifier to the target UE, so that the source UE can communicate with a specific target UE when the unicast connection between the source UE and the relay UE is multiplexed. Third, the source UE adds, to a message for requesting to discover the target UE, an identifier configured for the specific target UE, so that the source UE and the target UE can communicate with each other based on the identifier configured by the source UE after establishment of a unicast connection, allocation of the identifier to the target UE after establishment of the unicast connection between the source UE and the target UE is avoided, and signaling overheads are reduced.

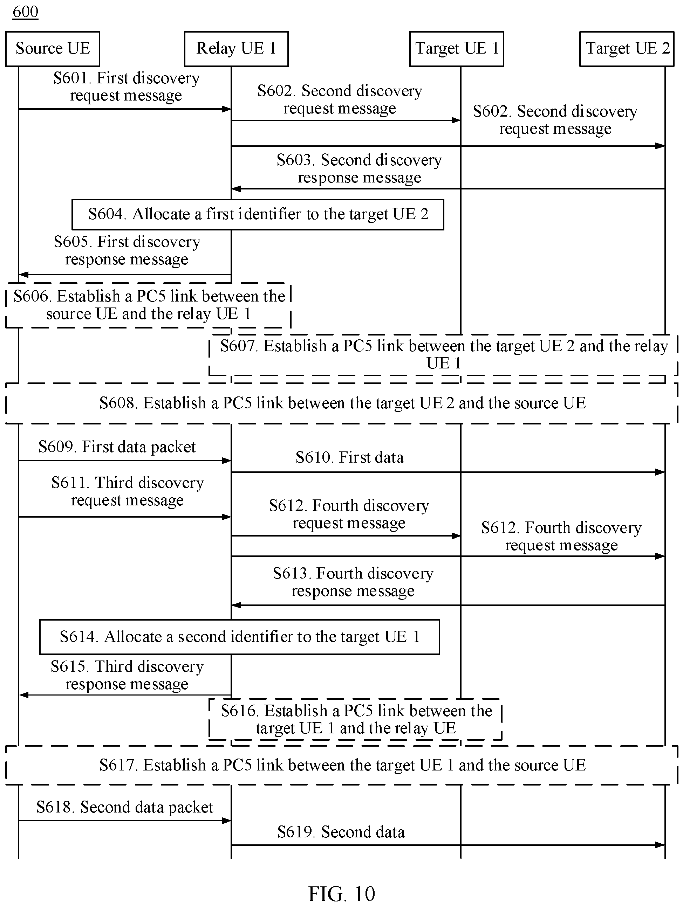

FIG. 10 is a diagram of the communication method 600 according to this application. A difference between the method 600 and the method 500 lies in that in the method 500, the source UE allocates the identifier to the target UE, and in the method 600, the relay UE allocates an identifier to the target UE. Specifically, each time a possible relay UE discovers a target UE, the relay UE allocates an identifier to the target UE. For beneficial effects of the method 600, directly refer to the method 500.

S601: The source UE broadcasts a first discovery request (discovery solicitation) message, and correspondingly, a plurality of possible relay UEs receive the first discovery request message. For details, refer to the corresponding descriptions of S501. A difference lies in that the first discovery request message in S601 does not carry the first identifier.

S602: The possible relay UE broadcasts a second discovery request message, and correspondingly, the target UE 1 and the target UE 2 receive the second discovery request message from the possible relay UE. For details, refer to the corresponding descriptions of S502.

S603: The target UE 2 replies with a second discovery response message, and correspondingly, the possible relay UE receives the second discovery response message from the target UE 2. For details, refer to the descriptions of S503.

S604: The possible relay UE allocates the first identifier to the target UE 2.

It should be understood that even if the source UE has not selected the possible relay UE as a relay UE that forwards a message for the source UE and the target UE 2, after receiving the second discovery response message with which the target UE 2 replies, the possible relay UE may first allocate an identifier to the target UE 2, so that the source UE can directly use the identifier when subsequently establishing an end-to-end unicast connection to the target UE 2 based on the possible relay UE.

S605: The possible relay UE replies to the source UE with a first discovery response message, and correspondingly, the source UE receives the first discovery response message from the possible relay UE. For details, refer to the corresponding descriptions of S504.

For S606 to S610, refer to the corresponding descriptions of S505 to S509.

For S611 to S615, refer to the descriptions of S601 to S605. A difference is as follows.

The first discovery request message is replaced with a third discovery request message. The second discovery request message is replaced with a fourth discovery request message. The second discovery response message is replaced with a fourth discovery response message. The first discovery response message is replaced with a third discovery response message. The target UE 2 is replaced with the target UE 1. The first identifier is replaced with a second identifier.

For details of S616 to S619, refer to the corresponding descriptions of S607 to S610. A difference lies in that the target UE 2 is replaced with the target UE 1, the first identifier is replaced with the second identifier, a first data packet is replaced with a second data packet, and first data is replaced with second data.

Based on a similar reason as in the method 500, a unicast connection between the source UE and the relay UE 1 can also be multiplexed in the method 600.

It may be understood that, to implement functions in the foregoing embodiments, a base station and a terminal include corresponding hardware structures and/or software modules for performing the functions. A person skilled in the art should be easily aware that the units and the steps of the method in the examples described with reference to embodiments disclosed in this application may be implemented in a form of hardware or a combination of hardware and computer software in this application. Whether a function is performed by hardware or hardware driven by computer software depends on particular application scenarios and design constraint conditions of the technical solutions.

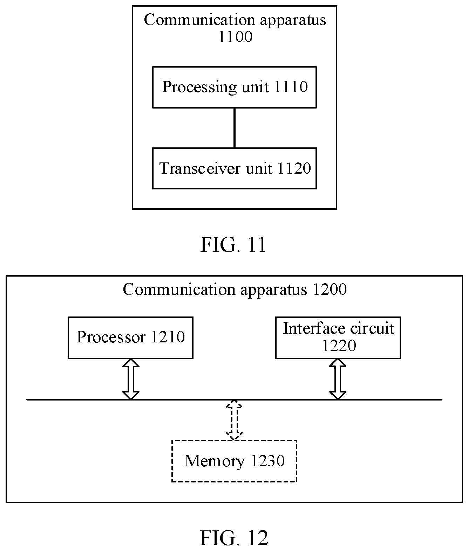

FIG. 11 and FIG. 12 each are a diagram of a possible structure of a communication apparatus according to an embodiment of this application. The communication apparatuses may be configured to implement functions of the source UE, the relay UE 1, or the target UE in the method embodiments. Therefore, the beneficial effects of the method embodiments can also be implemented. In this embodiment of this application, the communication apparatus may be the source UE, the relay UE 1, or the target UE, or may be a module (for example, a chip) used in the source UE, the relay UE 1, or the target UE.

As shown in FIG. 11, the communication apparatus 1100 includes a processing unit 1110 and a transceiver unit 1120. The communication apparatus 1100 is configured to implement the functions of the source UE, the relay UE 1, or the target UE in the method embodiments shown in FIG. 5 to FIG. 10.

When the communication apparatus 1100 is configured to implement a function of the relay UE 1 in the method embodiment shown in FIG. 7, the transceiver unit 1120 is configured to: receive a first unicast connection establishment request message from a source LTE; send a second unicast connection establishment request message to a target UE 2, to request to establish a unicast connection between the relay UE 1 and the target UE 2; receive, from the target UE 2, a second unicast connection establishment accept message indicating that the target UE 2 has accepted a request for establishing the unicast connection between the relay UE 1 and the target UE 2; send an identifier allocation request message to the source UE, to request the source UE to allocate an identifier to the target UE 2; receive an identifier allocation response message from the source UE, where the identifier allocation response message includes a first identifier but does not include a layer 2 address of the target UE 2, a bit length of the first identifier is less than or equal to 8 bits, and the first identifier identifies the target UE 2; receive, from the source UE, a third unicast connection establishment request message for requesting to establish a unicast connection between the source UE and the target UE 2; send a fourth unicast connection establishment request message to the target UE 2, to request to establish the unicast connection between the source UE and the target UE 2; receive, from the target UE 2, a fourth unicast connection establishment accept message indicating that the target UE 2 has accepted a request for establishing the unicast connection between the source UE and the target UE 2; send, to the source UE, a third unicast connection establishment accept message indicating that the target UE 2 has accepted the request for establishing the unicast connection between the source UE and the target UE 2, where the third unicast connection establishment accept message includes the first identifier; receive a first data packet from the source UE, where the first data packet includes the first identifier and first data; and send the first data to the target UE 2 based on the first identifier.

When the communication apparatus 1100 is configured to implement a function of the source UE in the method embodiment shown in FIG. 7, the transceiver unit 1120 is configured to: send a first unicast connection establishment request message to a relay UE 1; receive, from the relay UE 1, a first unicast connection establishment accept message indicating that a target UE 2 has accepted a request for establishing a unicast connection between the relay UE 1 and the target UE 2; receive an identifier allocation request message from the relay UE 1, where the identifier allocation request message is used to request the source UE to allocate an identifier to the target UE 2; send an identifier allocation response message to the relay UE 1, where the identifier allocation response message includes a first identifier but does not include a layer 2 address of the target UE 2, a bit length of the first identifier is less than or equal to 8 bits, and the first identifier is used by the source UE and the relay UE 1 to identify the target UE 2; send a third unicast connection establishment request message to the relay UE 1, to request to establish a unicast connection between the source UE and the target UE 2; receive, from the relay UE 1, a third unicast connection establishment accept message indicating that the target UE 2 has accepted a request for establishing the unicast connection between the source UE and the target UE 2; and send, by the source UE, a first data packet to the relay UE 1, where the first data packet includes the first identifier and first data.

When the communication apparatus 1100 is configured to implement a function of the relay UE 1 in the method embodiment shown in FIG. 5 or FIG. 6, the transceiver unit 1120 is configured to: receive a first unicast connection establishment request message from a source UE, where the first unicast connection establishment request message includes a first identifier, a bit length of the first identifier is less than or equal to 8 bits, and the first identifier is associated with a target UE 2; send a second unicast connection establishment request message to the target UE 2, to request to establish a unicast connection between the source UE and the target UE 2; receive, from the target UE 2, a second unicast connection establishment accept message indicating that the target UE 2 has accepted a request for establishing a unicast connection between the relay UE 1 and the target UE 2; receive, from the source UE, a third unicast connection establishment request message for requesting to establish the unicast connection between the source UE and the target UE 2, where the third unicast connection establishment request message includes the first identifier; send a fourth unicast connection establishment request message to the target UE 2, to request to establish the unicast connection between the source UE and the target UE 2; receive, from the target UE 2, a fourth unicast connection establishment accept message indicating that the target UE 2 has accepted a request for establishing the unicast connection between the source UE and the target UE 2; send, to the source UE, a third unicast connection establishment accept message indicating that the target UE 2 has accepted the request for establishing the unicast connection between the source UE and the target UE 2; receive a first data packet from the source UE, where the first data packet includes the first identifier and first data; and send the first data to the target UE 2 based on the first identifier.

When the communication apparatus 1100 is configured to implement a function of the source UE in the method embodiment shown in FIG. 7, the transceiver unit 1120 is configured to: send a first unicast connection establishment request message to a relay UE 1, where the first unicast connection establishment request message includes a first identifier, and the first identifier is associated with a target UE 2; send a third unicast connection establishment request message to the relay UE 1, to request to establish a unicast connection between the source UE and the target UE 2; receive, from the relay UE 1, a third unicast connection establishment accept message indicating that the target UE 2 has accepted a request for establishing the unicast connection between the source UE and the target UE 2; and send a first data packet to the relay UE 1, where the first data packet includes the first identifier and first data.

When the communication apparatus 1100 is configured to implement a function of the relay UE 1 in the method embodiment shown in FIG. 9, the transceiver unit 1120 is configured to: receive, from a source UE, a first discovery request message for requesting to discover a target UE 2, where the first discovery request message includes a first identifier, and the first identifier is associated with the target UE 2; send a second discovery request message to the target UE 2, to request to discover the target UE 2; receive, from the target UE 2, a second discovery response message indicating that the target UE 2 replies to the relay UE 1 with a layer 2 address of the target UE 2 based on the second discovery request message; receive, from the target UE 2, a first discovery response message indicating that the target UE 2 replies to the source UE with the layer 2 address of the target UE 2 based on the first discovery request message and the second discovery request message; send the first discovery response message to the source UE; receive a first data packet from the source UE, where the first data packet includes the first identifier and first data; and send the first data to the target UE 2 based on the first identifier.

When the communication apparatus 1100 is configured to implement a function of the source UE in the method embodiment shown in FIG. 9, the transceiver unit 1120 is configured to: send a first discovery request message to a relay UE 1, to request to discover a target UE 2, where the first discovery request message includes a first identifier, and the first identifier is associated with the target UE 2; receive, from the relay UE 1, a first discovery response message indicating that the target UE 2 replies to the relay UE 1 with a layer 2 address of the target UE 2 based on a second discovery request message; and send a first data packet to the relay UE 1, where the first data packet includes the first identifier and first data, and the first identifier indicates that the first data is to be sent to the target UE 2, to indicate the target UE 2 to reply to the source UE with the layer 2 address of the target UE 2 device based on the first discovery request message and the second discovery request message.

When the communication apparatus 1100 is configured to implement a function of the relay UE 1 in the method embodiment shown in FIG. 8, the transceiver unit 1120 is configured to: receive a first unicast connection establishment request message from a source UE; send a second unicast connection establishment request message to a target UE 2; receive, from the target UE 2, a second unicast connection establishment accept message indicating that the target UE 2 has established a unicast connection to the relay UE 1 based on the second unicast connection establishment request message; receive a third unicast connection establishment request message from the source UE; send the third unicast connection establishment request message to the target UE 2; receive, from the target UE 2, a third unicast connection establishment accept message indicating that the target UE 2 has established a unicast connection to the source UE based on the third unicast connection establishment request message; send the third unicast connection establishment accept message to the source UE; receive a first data packet from the source UE, where the first data packet includes a first identifier and first data; and send the first data to the target UE 2 based on the first identifier. The processing unit 1110 is configured to allocate the first identifier to the target UE 2.

When the communication apparatus 1100 is configured to implement a function of the source UE in the method embodiment shown in FIG. 8, the transceiver unit 1120 is configured to: send a first unicast connection establishment request message to a relay UE 1; send a third unicast connection establishment request message to the relay UE 1, to request to establish a unicast connection between the source UE and a target UE 2; receive, from the relay UE 1, a third unicast connection establishment accept message indicating that the target UE 2 has accepted a request for establishing the unicast connection between the source UE and the target UE 2; receive an association relationship between the target UE 2 and a first identifier from the relay UE 1; and send a first data packet to the relay UE 1 based on the association relationship, where the first data packet includes the first identifier and first data.

When the communication apparatus 1100 is configured to implement a function of the relay UE 1 in the method embodiment shown in FIG. 10, the transceiver unit 1120 is configured to: receive, from a source UE, a first discovery request message for discovering a target UE 2; send a second discovery request message to the target UE 2, to discover the target UE 2; receive, from the target UE 2, a second discovery response message indicating that the target UE 2 replies to the UE 1 with a layer 2 address of the target UE 2 based on the second discovery request message; receive, from the target UE 2, a first discovery response message indicating that the target UE 2 replies to the source UE with the layer 2 address of the target UE 2 device based on the first discovery request message and the second discovery request message; allocate a first identifier to the target UE 2; send the first discovery response message to the source UE; receive a first data packet from the source UE, where the first data packet includes the first identifier and first data; and send the first data to the target UE 2 based on the first identifier.

When the communication apparatus 1100 is configured to implement a function of the source UE in the method embodiment shown in FIG. 10, the transceiver unit 1120 is configured to: send a first discovery request message to a relay UE 1; receive, from the relay UE 1, a first discovery response message indicating that a target UE 2 replies to the source UE with a layer 2 address of the target UE 2 device based on the first discovery request message and a second discovery request message; receive an association relationship between the target UE 2 and a first identifier from the relay UE 1; and send, by the source UE, a first data packet to the relay UE 1 based on the association relationship, where the first data packet includes the first identifier and first data.

For more detailed descriptions of the processing unit 1110 and the transceiver unit 1120, refer to the related descriptions in the method embodiments shown in FIG. 5 to FIG. 10.

As shown in FIG. 12, the communication apparatus 1200 includes a processor 1210 and an interface circuit 1220. The processor 1210 and the interface circuit 1220 are coupled to each other. It may be understood that the interface circuit 1220 may be a transceiver or an input/output interface. Optionally, the communication apparatus 1200 may further include a memory 1230, configured to: store instructions executed by the processor 1210, store input data needed by the processor 1210 to run instructions, or store data generated after the processor 1210 runs instructions.

When the communication apparatus 1200 is configured to implement the methods shown in FIG. 5 to FIG. 10, the processor 1210 is configured to implement a function of the processing unit 1110, and the interface circuit 1220 is configured to implement a function of the transceiver unit 1120.

When the communication apparatus is a chip used in the relay UE 1, the chip of the relay UE 1 implements the functions of the relay UE 1 in the foregoing method embodiments. The chip of the relay UE 1 receives information from another module (for example, a radio frequency module or an antenna) of the relay UE 1, where the information is sent by a source UE or a target UE to the relay UE 1. Alternatively, the chip of the relay UE 1 sends information to another module (for example, a radio frequency module or an antenna) of the relay UE 1, where the information is sent by the relay UE 1 to a source UE or a target UE.

When the communication apparatus is a chip used in the source UE, the chip of the source UE implements the functions of the source UE in the foregoing method embodiments. The chip of the source UE receives information from another module (for example, a radio frequency module or an antenna) of the source UE, where the information is sent by a target UE or a relay UE 1 to the source UE. Alternatively, the chip of the source UE sends information to another module (for example, a radio frequency module or an antenna) of the source UE, where the information is sent by the source UE to a target UE or a relay UE 1.

When the communication apparatus is a chip used in the target UE, the chip of the target UE implements the functions of the target UE in the foregoing method embodiments. The chip of the target UE receives information from another module (for example, a radio frequency module or an antenna) of the target UE, where the information is sent by a source UE or a relay UE 1 to the target UE. Alternatively, the chip of the target UE sends information to another module (for example, a radio frequency module or an antenna) of the target UE, where the information is sent by the target UE to a source UE or a relay UE 1.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The steps of the method in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be located in an ASIC. In addition, the ASIC may be located in a base station or a terminal. Alternatively, the processor and the storage medium may exist in a base station or a terminal as discrete components.

All or some of the foregoing embodiments may be implemented by software, hardware, firmware, or any combination thereof. When software is used to implement the foregoing embodiments, all or a part of the foregoing embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A relay communication method, performed by a relay terminal and comprising:
receiving a first unicast connection establishment request message from a source terminal;
sending a second unicast connection establishment request message to a first target terminal, to request to establish a unicast connection between the relay terminal and the first target terminal;
receiving, from the first target terminal, a second unicast connection establishment accept message indicating that the first target terminal has accepted a request for establishing the unicast connection between the relay terminal and the first target terminal;
sending an identifier allocation request message to the source terminal, to request the source terminal to allocate an identifier to the first target terminal;
receiving an identifier allocation response message from the source terminal, wherein the identifier allocation response message comprises a first identifier but does not comprise a layer 2 address of the first target terminal, a bit length of the first identifier is less than or equal to 8 bits, and the first identifier is used by the source terminal and the relay terminal to identify the first target terminal;
receiving, from the source terminal, a third unicast connection establishment request message for requesting to establish a unicast connection between the source terminal and the first target terminal;
sending a fourth unicast connection establishment request message to the first target terminal, to request to establish the unicast connection between the source terminal and the first target terminal;
receiving, from the first target terminal, a fourth unicast connection establishment accept message indicating that the first target terminal has accepted a request for establishing the unicast connection between the source terminal and the first target terminal;
sending, to the source terminal, a third unicast connection establishment accept message indicating that the first target terminal has accepted the request for establishing the unicast connection between the source terminal and the first target terminal, wherein the third unicast connection establishment accept message comprises the first identifier;
receiving a first data packet from the source terminal, wherein the first data packet comprises the first identifier and first data; and
sending the first data to the first target terminal based on the first identifier.

2. The method according to claim 1, wherein the method further comprises:
receiving a third security activation command message from the first target terminal;
sending a fourth security activation command message to the source terminal, wherein the fourth security activation command message comprises the first identifier indicating that the fourth security activation command message is from the first target terminal;
receiving a fourth security activation complete message from the source terminal, wherein the fourth security activation complete message comprises the first identifier indicating to send the fourth security activation complete message to the first target terminal; and
sending a third security activation complete message to the first target terminal.

3. The method according to claim 1 or 2, wherein the method further comprises:
receiving a second data packet from the source terminal, wherein the second data packet comprises a second identifier, second data, and a layer 2 address of the relay terminal, and the first data packet further comprises the layer 2 address of the relay terminal.

4. The method according to any one of claims 1 to 3, wherein the sending the first data to the first target terminal based on the first identifier comprises:
sending the first data packet to the first target terminal based on the first identifier.

5. The method according to any one of claims 1 to 4, wherein the method further comprises:
receiving a third data packet from the first target terminal, wherein the third data packet comprises third data and the first identifier; and
sending the third data packet to the source terminal based on the first identifier.

6. The method according to claim 5, wherein the method further comprises:
sending the first identifier to the first target terminal.

7. The method according to any one of claims 1 to 6, wherein the method further comprises:
receiving fourth data from the first target terminal;
configuring the first identifier for the fourth data based on an association relationship, to obtain a fourth data packet; and
sending the fourth data packet to the source terminal, wherein the fourth data packet comprises the fourth data and the first identifier.

8. A relay communication method, performed by a source terminal and comprising:
sending a first unicast connection establishment request message to a relay terminal;
receiving, from the relay terminal, a first unicast connection establishment accept message indicating that a first target terminal has accepted a request for establishing a unicast connection between the relay terminal and the first target terminal;
receiving an identifier allocation request message from the relay terminal, wherein the identifier allocation request message is used to request the source terminal to allocate an identifier to the first target terminal;
sending an identifier allocation response message to the relay terminal, wherein the identifier allocation response message comprises a first identifier but does not comprise a layer 2 address of the first target terminal, a bit length of the first identifier is less than or equal to 8 bits, and the first identifier is used by the source terminal and the relay terminal to identify the first target terminal;
sending a third unicast connection establishment request message to the relay terminal, to request to establish a unicast connection between the source terminal and the first target terminal;
receiving, from the relay terminal, a third unicast connection establishment accept message indicating that the first target terminal has accepted a request for establishing the unicast connection between the source terminal and the first target terminal; and
sending, by the source terminal, a first data packet to the relay terminal, wherein the first data packet comprises the first identifier and first data.

9. The method according to claim 8, wherein the method further comprises:
receiving a fourth security activation command message from the relay terminal, wherein the fourth security activation command message comprises the first identifier indicating that the fourth security activation command message is from the first target terminal; and
sending a fourth security activation complete message to the relay terminal, wherein the fourth security activation complete message comprises the first identifier indicating to send the fourth security activation complete message to the first target terminal.

10. The method according to claim 8 or 9, wherein the method further comprises:
sending a second data packet to the relay terminal, wherein the second data packet comprises a second identifier, second data, and a layer 2 address of the relay terminal, and the first data packet further comprises the layer 2 address of the relay terminal.

11. A communication apparatus, comprising a module configured to perform the method according to any one of claims 1 to 7, or comprising a module configured to perform the method according to any one of claims 8 to 10.

12. A communication apparatus, comprising a processor and an interface circuit, wherein the interface circuit is configured to: receive a signal from another communication apparatus and transmit the signal to the processor, or send a signal from the processor to another communication apparatus; and the processor is configured to implement the method according to any one of claims 1 to 7 or the method according to any one of claims 8 to 10 by using a logic circuit or executing code instructions.

13. A computer-readable storage medium, wherein the storage medium stores a computer program or instructions, and when the computer program or the instructions are executed by a communication apparatus, the method according to any one of claims 1 to 7 is implemented, or the method according to any one of claims 8 to 10 is implemented.
